# EUROPÄISCHE PATENTSCHRIFT

(11) **EP 3 735 532 B1**
(45) Veröffentlichungstag und Bekanntmachung des Hinweises auf die Patenterteilung: **15.01.2025**
(21) Anmeldenummer: 18822306.9
(22) Anmeldetag: 11.12.2018
(51) Int. Cl.: F03D 7/02

(54) **BETREIBEN EINER WINDENERGIEANLAGE BEI STURM**
OPERATION OF A WIND POWER PLANT DURING A STORM
FONCTIONNEMENT D'UNE ÉOLIENNE EN CAS DE TEMPÊTE

(30) Priorität: 04.01.2018 DE 102018100127
(43) Veröffentlichungstag der Anmeldung: 11.11.2020
(73) Patentinhaber: Wobben Properties GmbH, 26607 Aurich (DE)
(72) Erfinder: MESSING, Ralf, 26605 Aurich (DE); KIMILLI, Mustafa Onur, 81371 München (DE); SENFTLEBEN, Daniel, 26603 Aurich (DE)
(74) Vertreter: Eisenführ Speiser
(86) Internationale Anmeldenummer: PCT/EP2018/084343
(87) Internationale Veröffentlichungsnummer: WO 2019/134793

(56) Entgegenhaltungen:
- EP-A1- 1 988 284
- EP-A2- 2 063 111
- EP-B1- 2 063 111
- DE-A1- 102011 006 670
- DE-A1- 19 532 409

## Beschreibung

Die vorliegende Erfindung betrifft ein Verfahren zum Steuern einer Windenergieanlage und die vorliegende Erfindung betrifft eine entsprechende Windenergieanlage.

Windenergieanlagen werden gelegentlich auch bei Sturm betrieben, also bei Windgeschwindigkeiten oberhalb von 20 m/s. Eine Variante dafür ist, die Windenergieanlage mit Hilfe einer Betriebskennlinie, die den Zusammenhang zwischen Ausgangsleistung und Rotordrehzahl vorgibt, und einer Windgeschwindigkeits-Drehzahl-Kennlinie zu betreiben. Die Windenergieanlage wird dabei derart geregelt, dass über die an der Windenenergieanlage gemessene Windgeschwindigkeit und die Windgeschwindigkeits-Drehzahl-Kennlinie eine Drehzahl vorgegeben wird, bei der die Anlage bei der gemessenen Windgeschwindigkeit betrieben wird. Das Regeln auf diese vorbestimmte Drehzahl wird dabei durch Einstellen eines Blattwinkels der Rotorblätter der Windenergieanlage durchgeführt, was auch als Pitchen der Rotorblätter bezeichnet wird.

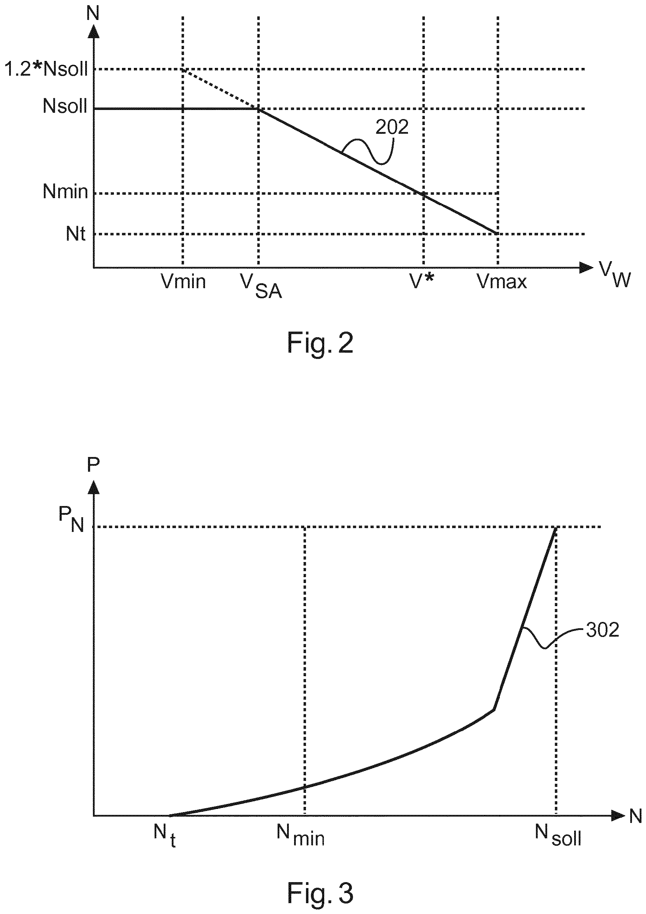

Über die Betriebskennlinie wird der Windenergieanlage dann vorgegeben, welche Ausgangsleistung ins elektrische Versorgungsnetz, was auch vereinfachend als Stromnetz bezeichnet werden kann, eingespeist werden soll. Über die Betriebskennlinie wird also abhängig der Drehzahl die Ausgangsleistung der Windenergieanlage vorgegeben und dann entsprechend eingestellt. Die Figuren 2 und 3 zeigen die genannten Kennlinien der Sturmregelung. Figur 2 zeigt nämlich die Windgeschwindigkeits-Drehzahl-Kennlinie und Figur 3 zeigt die genannte Betriebskennlinie, also die Kennlinie, die die Ausgangsleistung in Abhängigkeit der Drehzahl vorgibt.

Besonders Figur 2 zeigt dabei, dass die Windenergieanlage demnach bis zum Beginn der Sturmregelung bei der Windgeschwindigkeit V_{SA} mit der konstanten Nenndrehzahl Nₛₒₗₗ betrieben wird, bei der die Windenergieanlage maximale Leistung, nämlich die Nennleistung als Ausgangsleistung abgibt und damit in das elektrische Versorgungsnetz einspeist. Ab der Windgeschwindigkeit V_{SA}, die auch als Sturmanfangswindgeschwindigkeit bezeichnet werden kann, beginnt der Sturmregelungsbetrieb, wobei die Drehzahl von der Nenndrehzahl Nₛₒₗₗ linear bis auf eine Trudeldrehzahl Nt bei einer Windgeschwindgeschwindigkeit Vₘₐₓ abgesenkt wird, um die Belastungen auf die Windenergieanlage innerhalb vorgesehener Limits zu begrenzen. Die Windgeschwindigkeit Vₘₐₓ kann auch als maximale Windgeschwindigkeit oder maximale Sturmwindgeschwindigkeit bezeichnet werden.

Ab dieser maximalen Windgeschwindigkeit Vₘₐₓ trudelt die Windenergieanlage nur noch und speist keine Leistung mehr ein. Dazu muss die Windgeschwindigkeit aber die maximale Windgeschwindigkeit Vₘₐₓ in einem 12-Sekunden-Mittel überschreiten.

Charakteristische Werte für die Sturmanfangswindgeschwindigkeit und die maximale Windgeschwindigkeit V_{SA} bzw. Vₘₐₓ variieren zwischen den einzelnen Typen der Windenergieanlage. Dabei liegt die Sturmanfangswindgeschwindigkeit in einem Bereich von 25 bis 29 m/s und die maximale Windgeschwindigkeit oder maximale Sturmwindgeschwindigkeit Vₘₐₓ liegt im Bereich 37 bis 41 m/s.

Die Betriebskennline im Sturmbetrieb, die also in der Figur 3 dargestellt ist, ist gemäß dem Stand der Technik identisch mit einer Betriebskennlinie im Normalbetrieb bzw. in einem Teillastbetrieb. Sie wird von der Nenndrehzahl Nₛₒₗₗ bei Nennleistung Pₘₐₓ bis auf die Trudeldrehzahl Nt bei der minimalen Leistung Pₘᵢₙ = 0kW abgefahren. Aus welchem Grund die Drehzahl unterhalb der Nenndrehzahl Nₛₒₗₗ liegt wird bei der Betriebskennlinie gemäß Figur 3 nicht unterschieden.

Durch das beschriebene Pitchen der Rotorblätter wird weniger Leistung aus dem Wind entnommen, insbesondere wird weniger als Nennleistung entnommen. Aus energetischer Sicht ist es grundsätzlich egal, warum weniger Leistung als Nennleistung zur Verfügung steht, ob das also aufgrund des Pitchens der Rotorblätter bei Sturm geschieht oder weil der Wind schwächer geworden ist. Daher kann für den Teillastbetrieb, wenn der Wind also noch keine Nennwindgeschwindigkeit erreicht hat und damit noch keine Nennleistung erzeugbar ist, und im Sturmbetrieb die gleiche Betriebskennlinie, also die gleiche Drehzahl-Leistungs-Kennlinie verwendet werden, wie sie in Figur 3 gezeigt ist.

Eine Belastung im Sturmbetrieb kann dennoch hoch sein, weil neben der energetischen Betrachtung auch besonders die Kräfte, die auf die Rotorblätter wirken, zu berücksichtigen sind.

Um dem zu begegnen, kann im Sturmbetrieb eine noch weitere Reduzierung der Drehzahl, Leistung oder von beidem vorgenommen werden. Eine Belastungsreduzierung muss dadurch aber nicht unbedingt gegeben sein, zumal die Windenergieanlage weiterhin im Wind, in dem Fall also im Sturm, steht. Zudem ergibt sich auch der Nachteil der Leistungseinbuße, die aber zum Schutz der Anlage hingenommen werden muss.

Das Deutsche Patent- und Markenamt hat in der Prioritätsanmeldung zu vorliegender PCT-Anmeldung folgenden Stand der Technik recherchiert: EP 2 063 111 A2, WO 2017/085156 A1 und WO 2017/178429 A1.

Die DE 10 2011 006 670 A1 beschreibt ein Verfahren zum Betreiben einer Windenergieanlage, wonach die Windenergieanlage bezogen auf vorherrschende Windbedingungen im Vergleich zu einem optimalen Betriebspunkt mit einer optimalen Drehzahl für einen Übergangszeitraum mit einer erhöhten Drehzahl betrieben wird. Bei dieser Betriebsart wird mehr kinetische Energie in den drehenden Teilen der Windenergieanlage gespeichert. Jenseits der maximalen Windgeschwindigkeit wird die Leistung zum Schutz der Anlage bei weiter zunehmender Windgeschwindigkeit reduziert.

Der vorliegenden Erfindung liegt somit die Aufgabe zugrunde, zumindest eins der o.g. Probleme zu adressieren. Insbesondere soll eine Lösung vorgeschlagen werden, die im Sturmfall zu einer möglichst geringen Belastung der Windenergieanlage führt und/oder zu einer möglichst geringen Leistungseinbuße führt. Insbesondere soll somit eine Verbesserung bisher bekannter Sturmregelungen vorgeschlagen werden. Zumindest soll zu bisher bekannten Lösungen eine Alternative vorgeschlagen werden.

Erfindungsgemäß wird ein Verfahren gemäß Anspruch 1 vorgeschlagen. Dieses Verfahren geht von einer Windenergieanlage zum Erzeugen elektrischer Leistung aus Wind aus. Eine solche Windenergieanlage weist einen Rotor mit wenigstens einem, insbesondere mehreren Rotorblättern auf, die in ihrem Blattwinkel verstellbar sind. Das Verfahren betrifft also eine sog. Pitch-gesteuerte Windenergieanlage. Die Windenergieanlage ist zudem eine solche, bei der der Rotor mit variabler Drehzahl betreibbar ist.

Gemäß dem vorgeschlagenen Verfahren wird die Windenergieanlage in einem Teillastbetrieb gesteuert, wenn der Wind eine Windgeschwindigkeit unterhalb einer Nennwindgeschwindigkeit aufweist. Die Windenergieanlage wird in einem Sturmbetrieb gesteuert, wenn der Wind eine Windgeschwindigkeit oberhalb einer Sturmanfangswindgeschwindigkeit aufweist. Sowohl im Teillastbetrieb als auch im Sturmbetrieb wird eine von der Windenergieanlage abzugebende Ausgangsleistung in Abhängigkeit einer Betriebskennlinie eingestellt. Die Betriebskennlinie beschreibt in beiden Fällen einen Zusammenhang zwischen der Drehzahl und der Ausgangsleistung und die Betriebskennlinie gibt dabei die Ausgangsleistung in Abhängigkeit der Drehzahl vor bzw. sie gibt den Zusammenhang zwischen diesen beiden Größen vor.

Zum Steuern der Windenergieanlage im Teillastbetrieb wird dabei als Betriebskennlinie eine Teillastbetriebskennlinie verwendet. Zum Steuern der Windenergieanlage im Sturmbetrieb wird als Betriebskennlinie eine Sturmbetriebskennlinie verwendet und diese beiden Betriebskennlinien, also die Teillastbetriebskennlinie und die Sturmbetriebskennlinie, sind unterschiedlich.

Dazu wird vorgeschlagen, dass die Sturmbetriebskennlinie im Vergleich zur Teillastbetriebskennlinie zumindest abschnittsweise, zu gleichen Leistungswerten geringere Drehzahlwerte aufweist.

Eine solche Verringerung der Drehzahl bei gleichen Leistungswerten im Sturmbetrieb im Vergleich zum Teillastbetrieb ist keineswegs eine triviale Maßnahme zur Lastreduzierung, denn diese Maßnahme bedeutet auch, dass zu gleichen Drehzahlwerten höhere Leistungswerte eingestellt werden, was grundsätzlich zu einer Belastungserhöhung führen kann. Es wurde aber erkannt, dass ein solcher veränderter Zusammenhang besonders auch aerodynamische Vorteile bietet.

Es ist auch zu beachten, dass zunächst die Drehzahl im Sturmbetrieb in Abhängigkeit der Windgeschwindigkeit eingestellt wird, und erst abhängig davon eine Leistungseinstellung erfolgt.

Es wurde aber erkannt, dass besonders die aerodynamischen Verhältnisse im Sturmbetrieb im Vergleich mit dem Teillastbetrieb sich derart unterscheiden, dass im Sturmbetrieb zu gleichen Leistungswerten geringere Drehzahlwerte vorteilhaft sind.

Insbesondere wird daher auch vorgeschlagen, dass die Sturmbetriebskennlinie im Vergleich zur Teillastbetriebskennlinie in ihrem gesamten Bereich zu gleichen Leistungswerten geringere Drehzahlwerte aufweist. Eine solche allgemeine Aussage ergibt sich keineswegs automatisch aus einem Wunsch, im Sturmbetrieb eine Belastung zu reduzieren. Vielmehr kann sich der Fachmann ohne genauere Betrachtung der Zusammenhänge, was nachfolgend auch noch im Detail gemacht wird, keinen Vorteil von einer solchen Veränderung der Drehzahl-Leistungs-Kennlinie versprechen. Für eine Belastungsreduzierung im Sturmbetrieb wäre es vielmehr naheliegend, Drehzahl und Leistung in Bezug auf hohe Windgeschwindigkeiten weiter zu reduzieren, wenn bisherige Reduzierungen zur Belastungsbegrenzung nicht ausreichend erschienen.

Gemäß einem nicht beanspruchten Ausführungsbeispiel wird vorgeschlagen, dass eine Windgeschwindigkeits-Drehzahl-Kennlinie ab der Sturmanfangswindgeschwindigkeit eine Reduzierung der Drehzahl mit zunehmender Windgeschwindigkeit vorgibt, wobei ein Maß der Reduzierung der Drehzahl mit zunehmender Windgeschwindigkeit zunimmt. Die Drehzahl wird demnach also mit steigender Windgeschwindigkeit immer schneller reduziert somit wird ein negativer Drehzahlgradient dem Betrage nach mit zunehmender Windgeschwindigkeit zunehmen, der Drehzahlgradient wird also abnehmen. Dadurch kann die Drehzahl am Anfang langsamer reduziert werden.

Weiterhin wurde erkannt, dass u.a. auch eine Problematik durch zu erwartende Strömungsabrisse an den Rotorblättern besteht. Erfindungsgemäß wird daher vorgeschlagen, dass die Sturmanfangswindgeschwindigkeit abhängig eines zu erwartenden Strömungsabrisses an den Rotorblättern ausgewählt wird. Besonders solche Strömungsabrisse können eine große Belastung für das entsprechende Rotorblatt und damit den Rotor und die Windenergieanlage darstellen. Solche Strömungsabrisse können auch auf der Druckseite des Rotorblattprofils auftreten. Hinsichtlich solcher Strömungsabrisse ist auch zu beachten, dass diese nicht nur abhängig der Windgeschwindigkeit auftreten können, sondern auch abhängig des Blattwinkels und der Rotordrehzahl bzw. der Umlaufgeschwindigkeit an dem jeweils betrachteten Profilabschnitt. Besonders ist hier zu beachten, dass solche Strömungsabrisse nicht am gesamten Blatt zugleich auftreten, sondern auch nur lokal auftreten können, besonders im äußeren Bereich des Rotors. In diesem Fall gibt es Bereiche des Rotorblattes, an denen ein Strömungsabriss auftreten kann und Bereiche, in denen ein Strömungsabriss nicht zu erwarten ist. Dadurch können besonders unangenehme Differenzlasten entlang des Rotorblattes auftreten.

Daher wird eine Berücksichtigung zu erwartender Strömungsabrisse vorgeschlagen.

Dabei ist zu beachten, dass in Simulationen oder auch Modellversuchen solche Eigenschaften der Rotorblätter gut erforscht werden können und daher auch vorhersehbar sind. Besonders können solche Studien oder Voruntersuchungen aufgrund von Betriebszuständen eine Aussage zulassen, ob, wo oder in welchem Maße Strömungsabrisse zu erwarten sind. Besonders Windgeschwindigkeit, Drehzahl, Blattwinkel lassen für jeweilige Abschnitte des Rotorblattes eine Einschätzung zu, ob ein Strömungsabriss zu erwarten ist.

Gemäß einer Ausführungsform wird vorgeschlagen, dass die Sturmanfangswindgeschwindigkeit in Abhängigkeit eines Leistungsbeiwertes der Rotorblätter ausgewählt wird. Es wurde erkannt, dass besonders die aerodynamischen Verhältnisse für den Sturmbereich wichtig sind und über die Betrachtung der Leistungsbeiwerte kann damit ein Kriterium geschaffen werden. Dabei wurde erkannt, dass der Leistungsbeiwert im Vollastbetrieb mit zunehmender Windgeschwindigkeit abnimmt, auch bedingt durch das Pitchen in diesem Volllastbetrieb. Zum Sturmbetrieb hin nimmt der Leistungsbeiwert somit stetig ab und kann dann als Indikator dienen, wenn der Sturmbetrieb erreicht ist. Über das Vorgeben eines Grenzwertes für den Leistungsbeiwert kann dadurch ein die Aerodynamik berücksichtigendes klares Kriterium vorgegeben werden, über das der Beginn des Sturmbetriebs erkannt werden kann.

Besonders ist die Windenergieanlage dabei so ausgelegt und wird so gesteuert, dass der Leistungsbeiwert wenigstens ab der Nennwindgeschwindigkeit, also ab Erreichen des Volllastbetriebs, mit zunehmender Windgeschwindigkeit sinkt. Und dazu wird vorgeschlagen, dass als Sturmanfangswindgeschwindigkeit diejenige Windgeschwindigkeit gewählt wird, bei der der Leistungsbeiwert unter einen vorgegebenen Sturmgrenzwert des Leistungsbeiwertes fällt. Besonders kann hier im Vorfeld eine entsprechende Untersuchung durchgeführt werden und ein windgeschwindigkeitsabhängiger Leistungsbeiwert aufgenommen werden. Dieser berücksichtigt dabei auch den jeweiligen Betriebspunkt und damit das Pitchen der Rotorblätter und dadurch kann im Vorfeld eine solche Festlegung vorgenommen werden. Von dem Leistungsbeiwert, besonders dem hier betrachteten mit zunehmender Windgeschwindigkeit sinkenden Leistungsbeiwert, können auch Erwartungen eines Strömungsabrisses abgeleitet werden. Es wird daher hier der Leistungsbeiwert und besonders ein entsprechend vorgegebener Sturmgrenzwert als Kriterium vorgeschlagen.

Gemäß einer Ausführungsform wird vorgeschlagen, dass die Sturmbetriebskennlinie eine lineare Sturmbetriebskennlinie bildet, die von einem vorgegebenen Sturmanfangsleistungswert bei einer vorgegebenen Sturmanfangsdrehzahl mit zunehmender Windgeschwindigkeit linear auf einen Sturmendleistungswert bei einer vorgegebenen Sturmenddrehzahl abfällt. Somit wird hier eine lineare, nämlich linear mit der Windgeschwindigkeit abfallende Sturmbetriebskennlinie vorgeschlagen. Dadurch kann eine zur Windgeschwindigkeit angemessene Reduzierung der Drehzahl erfolgen, die zudem auch auf einfache und gut praktisch umsetzbare Art und Weise einen Drehzahlanstieg bei wieder abfallender Windgeschwindigkeit vorgeben kann.

Alternativ wird vorgeschlagen, dass die Sturmbetriebskennlinie von dem vorgegebenen Sturmanfangsleistungswert bei der vorgebebenen Sturmanfangsdrehzahl mit zunehmender Windgeschwindigkeit zunächst auf einen Sturmhilfsleistungswert bei einer Sturmhilfsdrehzahl abfällt und von dort weiter auf den Sturmendleistungswert bei der vorgegebenen Sturmendleistungsdrehzahl abfällt, wobei der Sturmhilfsleistungswert bei der vorgegeben Sturmhilfsdrehzahl unterhalb einer bzw. der linearen Betriebskennlinie liegt.

Das bedeutet, dass die Sturmbetriebskennlinie von der Sturmhilfsdrehzahl zur Sturmenddrehzahl flacher verläuft, als von der Sturmanfangsdrehzahl zur Sturmhilfsdrehzahl. Dadurch kann besonders zu Beginn des Sturmes zunächst eine schnelle Leistungsreduktion erfolgen.

Vorzugsweise wird vorgeschlagen, dass die Windgeschwindigkeit erfasst wird und im Sturmbetrieb ab der Sturmanfangswindgeschwindigkeit die Rotorblätter in ihrem Blattwinkel abhängig der Windgeschwindigkeit verstellt werden, so dass sich eine geringere Drehzahl einstellt. Dazu wird dann vorgeschlagen, dass abhängig der sich einstellenden Drehzahl die Ausgangsleistung gemäß der Sturmbetriebskennlinie eingestellt wird. Es wird hier also ein Verfahren in zwei Schritten vorgeschlagen, bei dem zunächst die Rotorblätter in ihrem Blattwinkel verstellt werden, nämlich mit zunehmender Windgeschwindigkeit aus dem Wind gedreht werden. Dadurch wird weniger Leistung aus dem Wind entnommen, so dass sich eine geringere Drehzahl einstellt. Diese sich einstellende geringere Drehzahl wird dann in dem nächsten Schritt verwendet, um die Ausgangsleistung einzustellen. Das Einstellen der Ausgangsleistung erfolgt gemäß der Sturmbetriebskennlinie. Hierdurch kann zunächst eine unmittelbare Entlastung durch das Verstellen der Rotorblätter erreicht werden und dann die Ausgangsleistung nachgeführt werden.

Hierfür ist besonders die vorgeschlagene Sturmbetriebskennlinie vorteilhaft, die im Vergleich zur Teillastbetriebskennlinie zu gleichen Leistungswerten geringere Drehzahlwerte aufweist. Das bedeutet hier, dass die Leistung in diesem zweiten Schritt entsprechend weniger stark verringert wird, als dies bei Verwendung der Teillastbetriebskennlinie der Fall wäre. Hier wird besonders eine Anpassung der Drehzahlreduzierung durch das Verstellen der Rotorblätter in ihrem Blattwinkel an die vorteilhafte Sturmbetriebskennlinie vorgeschlagen.

Gemäß einer Ausgestaltung wird vorgeschlagen, dass im Sturmbetrieb ab der Sturmanfangswindgeschwindigkeit die Rotorblätter in ihrem Blattwinkel so verstellt werden, dass sich eine Drehzahl gemäß einer vorgegeben Windgeschwindigkeits-Drehzahl-Kennlinie ergibt. Somit kann durch diese Maßnahme eine Windgeschwindigkeits-Drehzahl-Kennlinie vorgegeben werden. Besonders die windgeschwindigkeitsabhängige Drehzahl hat unmittelbare Auswirkungen auf die aerodynamischen Kräfte am Rotorblatt. Besonders bei zusätzlicher Berücksichtigung des Blattwinkels und natürlich der bekannten Geometrie des Rotorblattes, können hier Effekte eines Strömungsabrisses berücksichtigt werden. Besonders können solche im Vorfeld erkannt werden und noch weiter bevorzugt wird vorgeschlagen, im Lichte solcher Erkenntnisse eine entsprechende Windgeschwindigkeits-Drehzahl-Kennlinie zu wählen, bei der unerwünschte Strömungsabrisse nicht auftreten oder zumindest reduziert werden können.

Gemäß einer Ausgestaltung wird vorgeschlagen, dass die Windgeschwindigkeits-Drehzahl-Kennlinie eine lineare Windgeschwindigkeits-Drehzahl-Kennlinie bildet, die von der vorgegebenen Sturmanfangsdrehzahl bei der vorgegebenen Sturmanfangswindgeschwindigkeit mit zunehmender Windgeschwindigkeit linear auf die vorgegebene Sturmenddrehzahl bei einer vorgegebenen Sturmendwindgeschwindigkeit abfällt. Demnach wird eine lineare Windgeschwindigkeits-Drehzahl-Kennlinie vorgeschlagen, bei der die Drehzahl linear mit steigender Windgeschwindigkeit abfällt, also proportional zu einer Windgeschwindigkeitszunahme sich verringert. Damit kann ein eindeutiger Zusammenhang zwischen Windgeschwindigkeit und Drehzahl geschaffen werden, der auch von der Windenergieanlage bzw. ihrer Steuerung gut umgesetzt werden kann. Mit einer solchen linearen Windgeschwindigkeits-Drehzahl-Kennlinie kann ebenso gut auch bei abfallender Windgeschwindigkeit die Drehzahl wieder erhöht werden. Besonders bevorzugt wird als Sturmanfangsdrehzahl die Nenndrehzahl verwendet. Demnach kann mit der vorgeschlagenen linearen Windgeschwindigkeits-Drehzahl-Kennlinie unmittelbar anschließend an den Volllastbetrieb die Drehzahl einfach linear mit zunehmender Windgeschwindigkeit abgesenkt werden.

Besonders bevorzugt wird eine solche lineare Windgeschwindigkeits-Drehzahl-Kennlinie mit einer linearen Drehzahl-Leistungskennlinie verbunden. Dadurch kann ein linearer Zusammenhang zwischen Ausgangsleistung und Windgeschwindigkeit geschaffen werden. Dadurch kann dann im Sturmfall bei steigender Windgeschwindigkeit die Drehzahl und die Ausgangsleistung gleichzeitig linear reduziert werden und damit können die entsprechenden Belastungen ebenfalls gleichzeitig reduziert bzw. begrenzt werden. Besonders wirkt sich eine Drehzahlreduzierung besonders auf mechanische Lasten der Rotorblätter aus, wohingegen sich eine Reduzierung der Ausgangsleistung eher auf Belastungen des Triebstrangs auswirken. Bei der vorgeschlagenen linearen Reduzierung sowohl der Drehzahl als auch der Leistung, kann somit eine Reduzierung für beide Bereiche gleichermaßen und gut nachvollziehbar durchgeführt werden.

Alternativ wird vorgeschlagen, dass die Windgeschwindigkeits-Drehzahl-Kennlinie von der vorgegebenen Sturmanfangsdrehzahl, nämlich vorzugsweise von der Nenndrehzahl, bei einer erhöhten Sturmanfangswindgeschwindigkeit, die größer ist als die vorgegebene, also nicht erhöhte, Sturmanfangswindgeschwindigkeit, mit zunehmender Windgeschwindigkeit zunächst auf eine Sturmzwischendrehzahl bei einer vorgegebenen Sturmzwischenwindgeschwindigkeit abfällt. Die Sturmzwischendrehzahl stimmt vorzugsweise mit der Sturmhilfsdrehzahl der Sturmbetriebskennlinie überein. In jedem Fall wird vorgeschlagen, von der Sturmzwischendrehzahl bei der vorgegebenen Sturmzwischenwindgeschwindigkeit weiter auf die vorgegebene Sturmenddrehzahl bei der vorgegebenen Sturmendwindgeschwindigkeit abzufallen, wobei vorzugsweise die Sturmzwischendrehzahl bei der vorgegebenen Sturmzwischenwindgeschwindigkeit oberhalb der linearen Windgeschwindigkeits-Drehzahl-Kennlinie liegt.

Vorzugsweise beginnt diese Windgeschwindigkeits-Drehzahl-Kennlinie bei einer erhöhten Sturmanfangswindgeschwindigkeit. Sie beginnt, bezogen auf eine ansteigende Windgeschwindigkeit somit später als die vorgebebene Sturmanfangswindgeschwindigkeit. Dadurch kann auch eine entsprechend erst später ansetzende Leistungsreduzierung erreicht werden. Diese bevorzugte Windgeschwindigkeits-Drehzahl-Kennlinie wird vorzugsweise in jedem Fall, also bei erhöhter oder nicht erhöhter Sturmanfangswindgeschwindigkeit, anfangs eine geringere Steigung aufweisen als später, also bei geringeren Windgeschwindigkeiten eine geringere Steigung als bei höheren Windgeschwindigkeiten aufweisen.

Es wurde hier besonders erkannt, dass ein zu frühes oder zu starkes Pitchen, oder ein zu frühes und zu starkes Pitchen, zu negativen Anstellwinkeln besonders im äußeren Bereich des Rotorblatts, also im Bereich zur Blattspitze hin, führen kann. Solche negativen Anstellwinkel können dann zu Stalleffekten führen, besonders auch an der Druckseite der Rotorblätter. Da diese negativen Anstellwinkel aber nicht am gesamten Blatt, also vom Wurzelbereich bis zur Blattspitze auftreten, sondern besonders im äußeren Bereich, bilden sich auch besonders nur dort Strömungsabrisse aus. Dadurch entstehen unterschiedliche Belastungen im äußeren und inneren Bereich des Rotorblattes, was auch zu einer Torsion des Rotorblattes führen kann. Eine solche Torsion kann den Effekt noch verstärken oder abschwächen, was im Ergebnis zu Torsionsschwingungen führen kann. Solche unterschiedlichen Belastungen, besonders die genannten Torsionsschwingungen, können eine hohe Belastung des Rotorblatts darstellen. Genau dagegen richten sich die vorgeschlagenen Maßnahmen. Besonders durch das Vermeiden eines zu frühen Verstellens der Blattwinkel so, dass sich auch die Drehzahl reduziert, können solche negativen Anstellwinkel in einem Teil des Rotorblattes vermieden werden.

Gemäß einer Ausgestaltung wird vorgeschlagen, dass die Windgeschwindigkeits-Drehzahl-Kennlinie ab der Sturmanfangswindgeschwindigkeit eine Reduzierung der Drehzahl mit zunehmender Windgeschwindigkeit vorgibt, wobei ein Maß der Reduzierung der Drehzahl mit zunehmender Windgeschwindigkeit zunimmt. Die Drehzahl wird also im Sturmfall mit zunehmender Windgeschwindigkeit reduziert, wie es grundsätzlich auch allgemein bekannt ist. Dazu wird nun aber zusätzlich vorgeschlagen, dass diese Reduzierung ebenfalls mit zunehmender Windgeschwindigkeit immer stärker zunimmt. Die Drehzahl fällt also immer steiler ab. Es ergibt sich dadurch eine Windgeschwindigkeits-Drehzahl-Kennlinie, die nach oben gewölbt ist. Dies kann stückweise erfolgen, indem im einfachsten Fall eine erste Reduzierungssteigung bis zu einer Sturmzwischenwindgeschwindgeschwindigkeit vorgenommen wird, und dann eine stärkere Reduzierung vorgenommen wird, also das Maß der Reduzierung erhöht wird. Es kann aber auch in mehreren Schritten durchgeführt werden, oder es kann bevorzugt auch kontinuierlich vorgenommen werden, so dass die Windgeschwindigkeits-Drehzahl-Kennlinie eine kontinuierliche, nach oben gewölbte Kennlinie bildet.

Auch hierdurch kann ein zu frühes zu schnelles Reduzieren der Drehzahl vermieden werden, dass nämlich überraschenderweise nicht unbedingt zu einer Entlastung der Windenergieanlage führen muss, sondern aufgrund bereits oben beschriebener aerodynamischer Belastung, insbesondere der Gefahr der Torsionsschwingungen, sogar ungünstig sein kann, zumindest hinsichtlich unmittelbarer aerodynamisch verursachter Belastungen. Durch diese Windgeschwindigkeits-Drehzahl-Kennlinie mit sich verstärkender Drehzahlreduzierung wird somit anfangs eine vorteilhafte schwächere Reduzierung der Drehzahl erreicht.

Gemäß einer weiteren Ausgestaltung wird vorgeschlagen, dass mit zunehmender Windgeschwindigkeit der Blattwinkel in Abhängigkeit der Windgeschwindigkeit zu einer Fahnenstellung hin, die dabei aber zunächst nicht erreicht wird, vergrößert wird, so dass sich eine Winkelerhöhung ergibt, um die Drehzahl zu verringern. Hier wird besonders angenommen, dass der Blattwinkel so definiert ist, dass die Fahnenstellung etwa einem Blattwinkel von 90° (und nicht 0°) entspricht, was insoweit eine übliche Definition des Blattwinkels ist, der auch als Pitch-Winkel bezeichnet werden kann. Ein Verstellen in Richtung zur Fahnenstellung hin ist also eine Erhöhung des Blattwinkels.

Abhängig der Verringerung der Drehzahl wird dann die Ausgangsleistung verringert. Es erfolgt also erst eine windgeschwindigkeitsabhängige Drehzahlverringerung und diese bildet dann die Basis für die Verringerung der Ausgangsleistung, wie es oben auch schon beschrieben wurde.

Es wurde nun erkannt, dass die Winkelerhöhung im Verhältnis zur Verringerung der Ausgangsleistung einen Winkel-Leistungs-Änderungskoeffizienten bildet. Der Winkel-Leistungs-Änderungskoeffizient C_{WP} kann somit definiert werden als das Verhältnis der Winkelerhöhung ΔW, die für eine bestimmte Windgeschwindigkeitszunahme vorgeschlagen wird, zur Verringerung der Ausgangsleistung ΔP, die für die resultierende Drehzahländerung vorgeschlagen wird, als C_{WP}= ΔW/ΔP. Zu diesem Winkel-Leistungs-Änderungskoeffizienten wird vorgeschlagen, dass dieser dem Betrage nach mit zunehmender Windgeschwindigkeit zunimmt. Hierüber kann ein vorteilhaftes Verhalten der Windenergieanlage im Sturmfall vorgegeben werden, denn die vorgeschlagene Zunahme des Winkel-Leistungs-Änderungskoeffizienten ergibt sich auch durch die entsprechende Veränderung der Ausgangsleistung. Besonders wird hier nämlich vorgeschlagen, die Ausgangsleistung im Vergleich zum Blattwinkel mit zunehmender Windgeschwindigkeit zunächst schneller, dann aber langsamer zu verstellen. Dadurch kann besonders auch erreicht werden, dass ein zu schnelles Verstellen des Blattwinkels und der Drehzahl, was zu den genannten aerodynamischen Problemen führen kann, einerseits vermieden, gleichzeitig aber die Ausgangsleistung und die damit zusammenhängenden Belastungen bereits anfangs schnell reduziert werden können.

Dazu wird vorzugsweise vorgeschlagen, dass der Winkel-Leistungs-Änderungskoeffizient ab einer vorbestimmten ersten Umkehr-Windgeschwindigkeit im Sturmbetrieb abnimmt und insbesondere ab einer zweiten Umkehr-Windgeschwindigkeit, die größer als die erste Umkehr-Windgeschwindigkeit ist, wieder zunimmt. Hierzu wurde besonders erkannt, dass bei einer hohen Windgeschwindigkeit im Sturmbetrieb, die besonders in einem Bereich von 25 bis 26 m/s liegt, eine zu schnelle Winkelerhöhung einen negativen, besonders einen stark negativen Anstellwinkel zu Folge haben kann. Um das zu vermeiden, wird der Winkel-Leistungs-Änderungskoeffizient hier ab der ersten Umkehr-Windgeschwindigkeit verringert, der Winkel wird ab dann also weniger schnell verringert. Ab der zweiten Umkehr-Windgeschwindigkeit kann die Leistung und/oder Drehzahl ausreichend abgefallen sein, dass der Winkel wieder schneller verringert werden kann.

Erfindungsgemäß wird zudem eine Windenergieanlage vorgeschlagen. Eine solche Windenergieanlage ist zum Erzeugen elektrischer Leistung aus Wind vorgesehen und weist einen Rotor mit in ihrem Blattwinkel verstellbaren Rotorblättern auf, wobei der Rotor mit variabler Drehzahl betreibbar ist. Die Windenergieanlage umfasst
- eine Steuerungseinheit zum Steuern der Windenergieanlage in einem Teillastbetrieb, wenn der Wind eine Windgeschwindigkeit unterhalb einer Nennwindgeschwindigkeit aufweist, und
- zum Steuern der Windenergieanlage in einem Sturmbetrieb, wenn der Wind eine Windgeschwindigkeit oberhalb einer Sturmanfangswindgeschwindigkeit aufweist, wobei
- die Steuerungseinrichtung dazu vorbereitet ist, die Windenergieanlage so zu steuern, dass
- im Teillastbetrieb und im Sturmbetrieb eine von der Windenergieanlage abzugebende Ausgangsleistung in Abhängigkeit einer Betriebskennlinie eingestellt wird, wobei die Betriebskennlinie einen Zusammenhang zwischen der Drehzahl und der Ausgangsleistung vorgibt,
- zum Steuern der Windenergieanlage im Teillastbetrieb als Betriebskennlinie eine Teillastbetriebskennlinie verwendet wird, und
- zum Steuern der Windenergieanlage im Sturmbetrieb als Betriebskennlinie eine Sturmbetriebskennlinie verwendet wird, und wobei
- die Sturmbetriebskennlinie und die Teillastbetriebskennlinie unterschiedlich sind und
- die Sturmbetriebskennlinie im Vergleich zur Teillastbetriebskennlinie, zumindest abschnittsweise, zu gleichen Leistungswerten geringere Drehzahlwerte aufweist, und/oder
- die Steuerungseinrichtung dazu vorbereitet ist, eine Windgeschwindigkeits-Drehzahl-Kennlinie vorzugeben, die ab der Sturmanfangswindgeschwindigkeit eine Reduzierung der Drehzahl mit zunehmender Windgeschwindigkeit vorgibt, wobei ein Maß der Reduzierung der Drehzahl mit zunehmender Windgeschwindigkeit zunimmt, also ein negativer Drehzahlgradient dem Betrage nach mit zunehmender Windgeschwindigkeit zunimmt, der Drehzahlgradient also abnimmt.

Eine solche Windenergieanlage ist besonders auch dazu vorbereitet, ein vorstehend beschriebenes Verfahren auszuführen, wie es zumindest gemäß einer Ausführungsform beschrieben wurde. Dazu ist eine Steuerungseinheit vorgesehen, die besonders auch als Prozessrechner ausgebildet sein kann, auf der die Funktionen implementiert sind und die entsprechende Steuerbefehle an Verstellglieder von Rotorblättern, Erregersteller oder auch zum Einspeisen in ein elektrisches Versorgungsnetz vorgesehene Frequenzwechselrichter übertragen kann.

Vorzugsweise weist eine solche Windenergieanlage wenigstens einen Windgeschwindigkeitssensor auf. Dieser Windgeschwindigkeitssensor wird besonders im Sturmbetrieb eingesetzt, in dem er dann die Windgeschwindigkeit erfasst und davon abhängig die Windenergieanlage, insbesondere hinsichtlich ihrer Drehzahl, gesteuert wird. Vorzugsweise sind mehrere unterschiedliche Windgeschwindigkeitssensoren vorgesehen, um eine Redundanz zu erreichen und/oder die Messgenauigkeit zu erhöhen.

Insbesondere ist die Steuerungseinheit zumindest gemäß einer Ausführungsform dazu vorgesehen, dass in ihr Kennlinien hinterlegt sind. Insbesondere wird vorgeschlagen, dass in der Steuerungseinheit eine Teillastbetriebskennlinie und eine Sturmbetriebskennlinie hinterlegt ist und vorzugsweise außerdem eine Windgeschwindigkeits-Drehzahl-Kennlinie, nämlich insbesondere für den Sturmbetrieb. Darauf basierend, also unter Verwendung einer oder mehrerer dieser Kennlinien kann die Steuerungseinheit und damit die Windenergieanlage wenigstens ein Verfahren ausführen, wie es vorstehend unter Bezugnahme auf wenigstens eine der Ausführungsformen des Verfahrens erläutert wurde.

Die Erfindung wird nun nachfolgend exemplarisch anhand von Ausführungsformen unter Bezugnahme auf die begleitenden Figuren näher erläutert.
- Figur 1: zeigt eine Windenergieanlage in einer perspektivischen Darstellung.
- Figur 2: zeigt veranschaulichend eine Windgeschwindigkeits-Drehzahl-Kennlinie für den Bereich des Sturmbetriebs.
- Figur 3: zeigt eine Drehzahl-Leistungs-Kennlinie und damit eine Betriebskennlinie.
- Figur 4: zeigt beispielhaft den Verlauf eines Anstellwinkels für einen Sturmbetriebsfall entlang eines Rotorblatts von der Blattwurzel bis zur Blattspitze in Abhängigkeit des Radius.
- Figur 5: zeigt eine verbesserte Windgeschwindigkeits-Drehzahl-Kennlinie.
- Figur 6: zeigt eine vorgeschlagene Betriebskennlinie.
- Figur 7: zeigt eine weitere vorgeschlagene Betriebskennlinie.

- Figur 8: stellt verschiedene Blattwinkelverläufe für verschiedene Ausführungsformen in Abhängigkeit der Windgeschwindigkeit gegenüber.
- Figur 9: zeigt verschiedene Anstellwinkel in einem äußeren Bereich eines Rotorblatts für verschiedene Ausführungsformen.
- Figur 10: erläutert die Bedeutung des Blattwinkels und des Anstellwinkels.

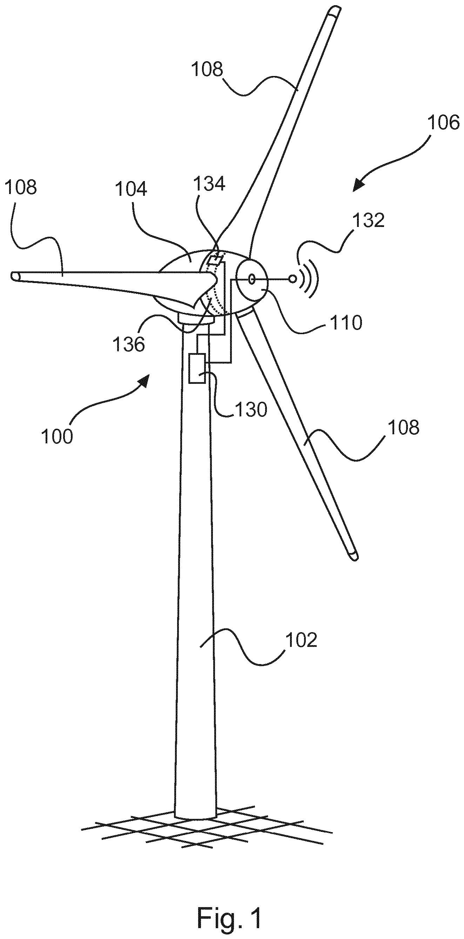

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

Figur 1 zeigt außerdem veranschaulichend eine Steuerungseinheit 130, die die Windenergieanlage 100 steuern kann. Zum Steuern der Windenergieanlage 100 in Abhängigkeit einer Windgeschwindigkeit ist ein Windgeschwindigkeitssensor 132 vorgesehen, der an dem Spinner 110 angeordnet sein kann. Er sendet seine Signale an die Steuerungseinheit 130. Die Steuerungseinheit 130 kann diese Signale auswerten und damit bspw. einen Pitchmotor 134 ansteuern, was in Figur 1 nur veranschaulichend gezeigt ist. Besonders ist nur ein Pitchmotor 134 gezeigt, wobei selbstverständlich jedes der Rotorblätter 108 über einen Pitchmotor 134 aufweisen kann, und darüber in seinem Blattwinkel verstellt werden kann. Ein Generator 136 ist ebenfalls in Figur 1 angedeutet und kann ggf. zur Einstellung der Ausgangsleistung von der Steuerungseinheit 130 angesteuert werden.

Figur 2 zeigt eine einfache Möglichkeit einer Windgeschwindigkeits-Drehzahl-Kennlinie 202. Diese weist bei Windgeschwindigkeiten unterhalb einer Mindestwindgeschwindigkeit Vₘᵢₙ die Nenndrehzahl Nₛₒₗₗ auf. Der Bereich vor dieser Mindestwindgeschwindigkeit bildet den Volllastbereich oder Volllastbetrieb der Windenergieanlage, jedenfalls solange die Windgeschwindigkeit nicht unter einer Nennwindgeschwindigkeit liegt, was in der Figur 2 nicht gezeigt ist, weil diese nur die Windgeschwindigkeits-Drehzahl-Kennlinie im Wesentlichen für den Sturmbetrieb zeigt. Überhaupt wird auch für andere Bereiche keine Windgeschwindigkeits-Drehzahl-Kennlinie vorgesehen. Es gibt zwar bekannte Zusammenhänge zwischen Windgeschwindigkeit und Drehzahl, die werden aber für den Volllastbetrieb und den Teillastbetrieb üblicherweise nicht zur Steuerung der Anlage herangezogen. Nur für den Sturmbetrieb wird vorgeschlagen, die Drehzahl in Abhängigkeit einer erfassten Windgeschwindigkeit entsprechend der Windgeschwindigkeits-Drehzahl-Kennlinie 202 einzustellen.

Bei dem Beispiel der Figur 2 beginnt dann der Sturmbetrieb ab der Sturmwindgeschwindigkeit, die als V_{SA} bezeichnet wird. Von da an fällt die Drehzahl gemäß der Windgeschwindigkeits-Drehzahl-Kennlinie 202 linear bis zur maximalen Windgeschwindigkeit Vₘₐₓ ab und erreicht dort die Trudeldrehzahl Nt. Es gibt auch eine Ausnahme, bei der nämlich bei der Sicherheitswindgeschwindigkeit V* die Windenergieanlage abgeschaltet werden kann, wenn die Windgeschwindigkeit im 10 Minutenmittel über dem Wert der Sicherheitswindgeschwindigkeit V* ist.

Die Windgeschwindigkeits-Drehzahl-Kennlinie 202 fällt hier linear ab und ihr linearer Abfall kann auch definiert werden über einen virtuellen Startwert, der sich bei der Mindestwindgeschwindigkeit und dem 1,2-fachen der Nennwindgeschwindigkeit befindet.

Figur 3 zeigt eine Drehzahl-Leistungs-Kennlinie und damit eine Betriebskennlinie 302, die auch als BKL abgekürzt werden kann. Diese zeigt einen Zusammenhang zwischen der Drehzahl N und der Leistung P. Bei im Grunde maximaler Drehzahl, nämlich der Nenndrehzahl Nₛₒₗₗ, liegt auch Nennleistung P_{N} vor. Bei entsprechend kleineren Drehzahlen ist auch die Leistung geringer und nimmt bei der Trudeldrehzahl Nt den Wert 0 an. Hier wird die Anlage also mit der Trudeldrehzahl betrieben, ohne Leistung zu erzeugen. Diese Betriebskennlinie 302 der Figur 3 kann den Zusammenhang zwischen der Drehzahl N und der Leistung P sowohl im Teillastbetrieb als auch im Sturmbetrieb wiedergeben bzw. vorgeben. Im Teillastbetrieb wäre es allerdings so, dass die Drehzahl mit steigender Windgeschwindigkeit steigt, wohingegen im Sturmbetrieb die Drehzahl mit steigender Windgeschwindigkeit fällt. Im Sturmbetrieb würde so gesehen quasi die Betriebskennlinie, bezogen auf die Windgeschwindigkeit, in umgekehrter Richtung betrieben werden.

Es ist nun das Folgende weiter zu beachten. Bei Sturm weist die Luft, die durch die Rotorkreisfläche strömt, sehr hohe kinetische Energie auf und nur ein kleiner Teil davon muss von der Windenergieanlage in Drehenergie umgewandelt werden, um die nach der Betriebskennlinie erforderliche Leistung zu erzeugen.

Es wurde erkannt, dass das dazu notwendige Drehmoment dabei im Wesentlichen nur noch im Blattinnenbereich erzeugt wird, was dazu führt, dass sich die Anstellwinkelverteilung über dem Rotorradius grundlegend von dem im Normalbetrieb unterscheidet.

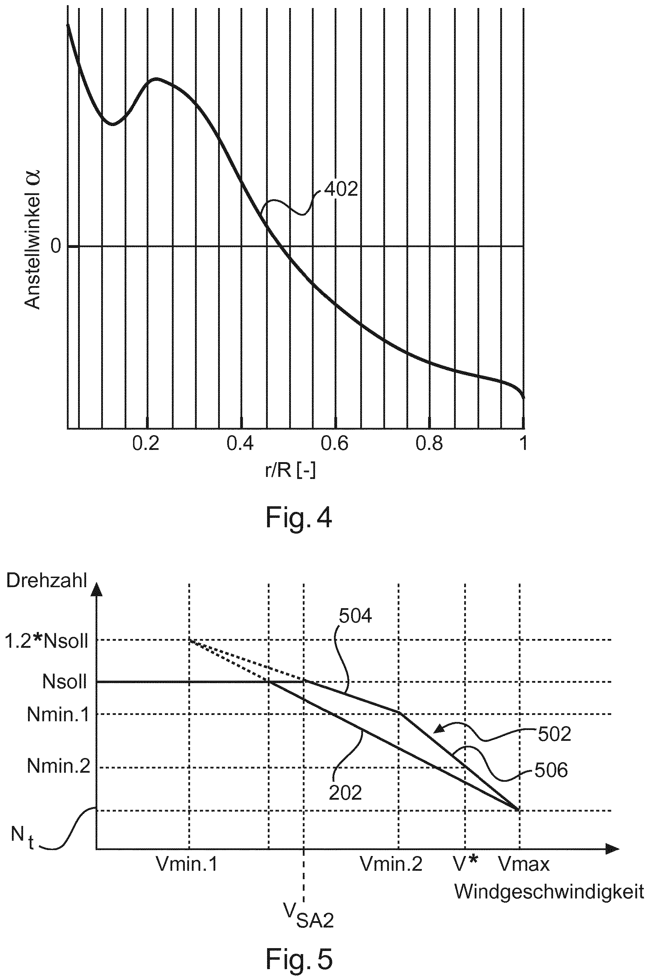

Um das zu veranschaulichen, zeigt Figur 4 einen typischen Anstellwinkelverlauf für eine Windgeschwindigkeit im Sturmbetrieb. Unter einem Anstellwinkel ist insoweit der Winkel zu verstehen, unter dem die Profilsehne des Rotorblattabschnitts in dem betreffenden Bereich tatsächlich angeströmt wird. Dieser Anstellwinkel hängt also ab von der tatsächlichen Stellung des Rotorblattes dort, dem vorherrschenden Wind dort und der Umlaufgeschwindigkeit des Rotorblattes dort.

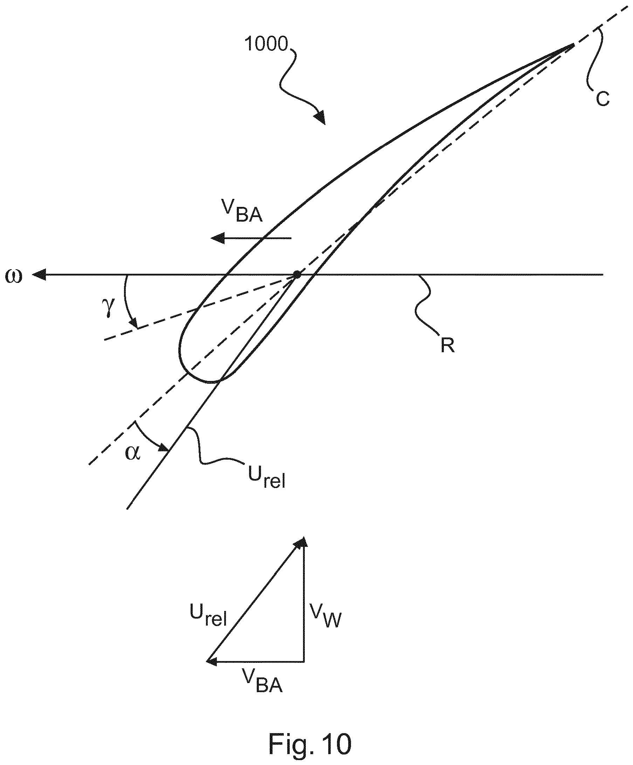

Zur Verdeutlichung des Blattwinkels y und des Anstellwinkels α sind diese in der Figur 10 für einen Profilschnitt 1000 dargestellt. Dieser Profilschnitt 1000 steht somit für einen Rotorblattabschnitt. Durch Drehung des Rotorblattes in der Rotorebene R mit der Drehzahl ω ergibt sich für den betrachteten Profilschnitt 1000 eine Blattabschnittsgeschwindigkeit V_{BA}, die somit parallel zur Rotorebene gerichtet ist. Die tatsächliche Windgeschwindigkeit Vw führt unter Berücksichtigung der Blattabschnittsgeschwindigkeit V_{BA} zu einer scheinbaren oder relativen Windgeschwindigkeit Uᵣₑₗ. Das ist in Figur 10 in einem eingeschobenen Bereich als schematische Vektordarstellung gezeigt. Allein die entsprechende relative Windrichtung Uᵣₑₗ ist an dem Profilschnitt 1000 angezeichnet. Der Winkel zwischen dieser relativen Windrichtung Uᵣₑₗ und der Profilsehne c ist der Anstellwinkel α. Er hängt auch unmittelbar von dem eingestellten Blattwinkel γ ab, der sich auf die Rotorebene R bezieht. Ein kleiner Blattwinkel γ entspricht einer Einstellung im Teillastbetrieb.

In der Figur 4 ist zu erkennen, dass sich positive Anstellwinkel nur im Blattinnenbereich befinden und dass der Wert der Anstellwinkel nach außen hin stark abnimmt und zur Blattspitze hin deutlich negativ wird. Es ist zu erwähnen, dass die Figur 4 dabei auf der Abszisse die jeweilige Position auf dem Rotorblatt bezogen auf die Gesamtlänge des Rotorblattes angibt. An der Blattspitze entspricht also die Position der Länge des Rotorblattes, so dass dort der Wert 1 ist. Dabei wird die Position als Radius r des Rotors betrachtet und bezogen auf den Gesamtradius R des Rotors bezogen. Die Darstellung der Abszisse geht somit nicht ganz bis auf 0, weil der Wert 0 in der Drehachse und damit im Spinner bzw. in der Nabe liegt.

Die Figur 4 zeigt nur ein Beispiel, es wurde aber erkannt, dass je höher die Windgeschwindigkeit liegt und je weniger Leistung die Windenergieanlage bei diesen höheren Windgeschwindigkeiten im Sturmbetrieb einspeist, desto ausgeprägter wird dieser Trend bzw. dieses Phänomen. Dabei wurde erkannt, dass dies insofern problematisch werden kann, als das bei hohen negativen Anstellwinkeln die Gefahr besteht, dass an den Profilen, an denen diese hohen negativen Anstellwinkel anliegen, der sog. negative Stall, also ein Strömungsabriss auf der Druckseite des Profils, auftreten kann. Je nach Profil und struktureller Auslegung des Rotorblattes kann somit die Gefahr bestehen, dass es am Rotorblatt aufgrund des Betriebs in Abschnitten des Rotorblattes mit negativem Stall zu unerwünschten aeroelastischen Phänomenen kommt. Das bedeutet, dass es zu Rücckopplungen zwischen den durch die Umströmung auf das Rotorblatt ausgeübten Kräften und den sich dadurch einstellenden elastischen Verformungen kommen kann. Solche Verformungen können wiederum eine sich ändernde Umströmung mit sich ändernden aerodynamisch bedingten Kräften zur Folge haben.

Dazu wurde auch erkannt, dass solche Rückkopplungen in einer Ausprägungsform zu einer oszillierenden Bewegung um die Längsachse des Rotorblattes führen können. Das Rotorblatt würde in diesem Fall also mit hoher Frequenz und Amplitude tordieren. Solche Rotorblattschwingungen könnten sogar Amplituden annehmen, die zur Schädigung des Rotorblattes führen können. Daher werden Maßnahmen zur Vermeidung vorgeschlagen. Besonders ist hier erkannt worden, dass im Sturmbetrieb einer Windenergieanlage solche Strömungsabrisse bei negativen Anstellwinkeln am Rotorblatt auftreten können. Entsprechend wird vorgeschlagen, besonders diesem Phänomen, also solchen negativen Anstellwinkeln entgegenzuwirken und sie möglichst zu vermeiden.

Figur 4 zeigt somit Anstellwinkel α über die Länge eines Rotorblattes mit der Gesamtlänge R, wobei als Gesamtlänge R tatsächlich der maximale Radius des Rotors verwendet wird, in dem das Rotorblatt betrieben wird und somit gibt der maximale Radius R den Wert von der Drehachse des Rotors bis zur Blattspitze an. Der betrachtete Radius r ist auf diesen maximalen Radius R normiert, so dass die Darstellung an der Abszisse bis zum Wert 1 reicht.

Es ist zu erkennen, dass dieser Anstellwinkelverlauf 402 etwa ab der Hälfte des Rotorblattes, also etwa ab dem Wert 0,5 für die radiale Position auf dem Rotorblatt negative Werte annimmt und weiter zur Blattspitze hin diese Werte dem Betrage noch größer werden, also noch weiter unter 0 liegen. Dies ist ein Beispiel für ein Rotorblatt, das im Sturmbetrieb zu stark in seinem Blattwinkel verstellt wurde, um dadurch zu stark die Drehzahl zu reduzieren. Bei geringerer Verstellung des Blattwinkels und dabei geringerer oder späterer Verringerung der Drehzahl würde der Anstellwinkel nicht so stark in den negativen Bereich übergehen, oder sogar gar nicht.

Aus dieser Erkenntnis heraus stellt sich daher für den Sturmbetrieb einer Windenergieanlage die Aufgabe, das Auftreten des Strömungsabrisses bei negativen Anstellwinkeln am Rotorblatt zu vermeiden.

Um das zu erreichen, wird daher vorgeschlagen, die Betriebsführung bei Sturm entsprechend anzupassen. Dazu wird besonders vorgeschlagen, die Betriebskennlinie oder die Windgeschwindigkeits-Drehzahl-Kennlinie oder beide Kennlinien gleichzeitig im Vergleich zu bisher verwendeten Varianten zu ändern. Besonders die folgenden Figuren 5 bis 7 sollen die vorgeschlagenen Verbesserungen oder Verbesserungsmöglichkeiten erläutern.

Figur 5 zeigt u.a. die Windgeschwindigkeits-Drehzahl-Kennlinie 202 der Figur 2. Es wird nun besonders vorgeschlagen, von dieser Windgeschwindigkeits-Drehzahl-Kennlinie 202 abzuweichen und dazu wird eine verbesserte Windgeschwindigkeits-Drehzahl-Kennlinie 502 vorgeschlagen. Diese verbesserte Windgeschwindigkeits-Drehzahl-Kennlinie 502 beginnt erst bei einer erhöhten Sturmanfangswindgeschwindigkeit V_{SA2} die Drehzahl zu reduzieren. Von dort fällt dann die Drehzahl mit geringerer Anfangsdrehzahlsteigung bis zur zweiten Mindestwindgeschwindigkeit Vₘᵢₙ₂ ab. Dabei erreicht sie die erste Mindestdrehzahl Nₘᵢₙ₁. Von dort fällt die verbesserte Windgeschwindigkeits-Drehzahl-Kennlinie 502 mit dem Betrage nach erhöhter Steigung auf die Trudeldrehzahl Nt bei der maximalen Windgeschwindigkeit Vₘₐₓ ab. Damit kann besonders erreicht werden, dass diese verbesserte Windgeschwindigkeits-Drehzahl-Kennlinie 502 oberhalb der Windgeschwindigkeits-Drehzahl-Kennlinie 202 liegt. Die erste Mindestdrehzahl Nₘᵢₙ₁ kann auch eine Sturmzwischendrehzahl oder eine Sturmhilfsdrehzahl bilden, die einer Sturmhilfsdrehzahl auch dem Wert nach entsprechen kann, die in einer späteren noch erläuterten Betriebskennlinie verwendet wird. Diese verbesserte Windgeschwindigkeits-Drehzahl-Kennlinie 502 reduziert somit vergleichsweise spät die Drehzahl und reduziert diese dann auch nur vergleichsweise wenig, jedenfalls anfangs. Erst später, nämlich ab der zweiten Mindestwindgeschwindigkeit Vₘᵢₙ₂ bzw. bei Erreichen der ersten Mindestdrehzahl Nₘᵢₙ₁ fällt die Drehzahl dann steil ab.

Auch das Abschalten der Windenergieanlage, wenn das 10 Minutenmittel der Windgeschwindigkeit oberhalb der Sicherheitswindgeschwindigkeit V* liegt, kann bei einer höheren Drehzahl, nämlich der zweiten Mindestdrehzahl Nₘᵢₙ₂ erfolgen.

Ziel des Vorschlags gemäß der verbesserten Windgeschwindigkeits-Drehzahl-Kennlinie 502 ist es, im Sturmbetrieb die Drehzahl anzuheben, im Vergleich zu bisherigen Ansätzen. Die Drehzahlen sollen also später und/oder weniger mit zunehmender Windgeschwindigkeit gesenkt werden, zumindest zu Beginn des Sturmbetriebs. Die Abschaltwindgeschwindigkeit, die auch als maximale Windgeschwindigkeit Vₘₐₓ bezeichnet werden kann, bleibt gleich und es kann auch, jedenfalls gemäß einer Ausführungsform, ein linearer Zusammenhang zwischen Windgeschwindigkeit und Drehzahl verwendet werden. Allerdings wird vorgeschlagen, hier abschnittsweise linear die Zusammenhänge vorzugeben, insbesondere in zwei Abschnitten, von denen der erste, also der bei geringeren Windgeschwindigkeiten, flacher ist und der zweite spätere, also bei höheren Windgeschwindigkeiten steiler ist.

Ein solcher erster und zweiter Abschnitt 504 bzw. 506 sind in der Figur 5 gezeigt. Vorgeschlagen wird somit als Verbesserung, dass der Beginn des Sturmbetriebs von der Sturmanfangswindgeschwindigkeit zu einer erhöhten Sturmanfangswindgeschwindigkeit V_{SA2} verschoben wird. Außerdem wird eine abschnittsweise lineare Kennlinie vorgeschlagen, die unterschiedliche Steigungen aufweist, mit dem Ziel, dass die Drehzahlen im gesamten Sturmbetrieb gegenüber besonders der Variante gemäß der Figur 2 angehoben werden.

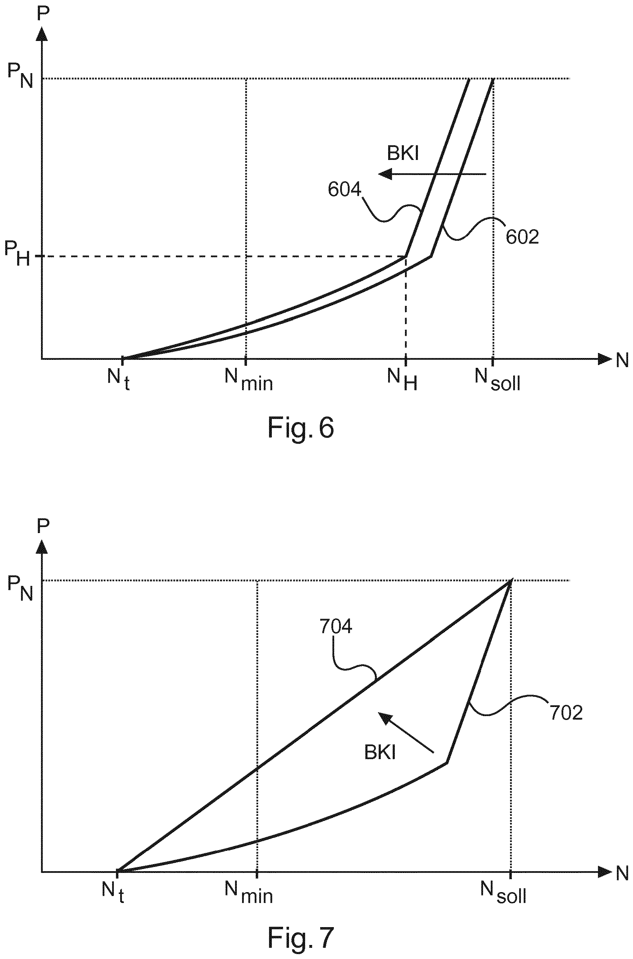

Dazu werden auch vorzugsweise angepasste Betriebskennlinien vorgeschlagen, die in den Figuren 6 und 7 gezeigt sind. Ziel bei den Änderungen der Betriebskennlinien ist, die Leistung bei einer gegebenen Drehzahl anzuheben. Eine Möglichkeit das zu realisieren ist, eine Betriebskennlinie zu verschieben, wie dies veranschaulichend in Figur 6 gezeigt ist. Dort ist zum Vergleich eine erste Betriebskennlinie gezeigt, die auch als normale Betriebskennlinie 602 bezeichnet werden kann, die, angedeutet durch einen Pfeil, im Grunde nach links zu der verbesserten Betriebskennlinie 604 verschoben wird. Diese Verschiebung bedeutet, dass im Ergebnis die Leistung P denselben Verlauf wie vorher zeigt, nur jeweils bei geringerer Drehzahl. Im Ergebnis wird die Leistung damit bei gleicher Drehzahl jeweils erhöht. Die Nennleistung P_{N} wird allerdings durch die Verschiebung auch bei einer etwas geringeren Drehzahl noch gehalten.

Für den konkreten Verlauf der Betriebskennlinie wird hier besonders vorgesehen, dass die verbesserte Betriebskennlinie 604, die hier eine Sturmbetriebskennlinie bildet, von dem vorgegebenen Sturmanfangsleistungswert P_{N} bei der vorgegebenen Sturmanfangsdrehzahl Nₛₒₗₗ mit zunehmender Windgeschwindigkeit Vw zunächst auf einen Sturmhilfsleistungswert P_{H} bei einer vorgegebenen Sturmhilfsdrehzahl N_{H} abfällt und von dort weiterauf den Sturmendleistungswert, nämlich 0, bei der vorgegebenen Sturmendleistungsdrehzahl Nt abfällt.

In einer anderen Ausführungsform kann von der Nenndrehzahl Nₛₒₗₗ bis zur Trudeldrehzahl Nt ein linearer Zusammenhang zwischen Leistung und Drehzahl vorgesehen sein. Dies ist in Figur 7 erläutert, die zum Vergleich auch eine normale Betriebskennlinie 702 zeigt, die keine unmittelbare Gerade darstellt, also keinen linearen Zusammenhang zwischen Leistung und Drehzahl. Diese normale Betriebskennlinie 702 wird gemäß dem angedeuteten Pfeil zu der verbesserten linearen Betriebskennlinie 704 verändert. Hier wurde besonders auch erkannt, dass ein solcher linearer Zusammenhang für eine Betriebskennlinie für den Sturmbetrieb geeignet, für den Teillastbetrieb aber weniger geeignet ist.

Besonders ist es im Teillastbetrieb aus aerodynamischen Gründen sinnvoll, zunächst möglichst schnell mit ansteigendem Wind die Drehzahlen zu erhöhen, weil dies bei den geringen Windgeschwindigkeiten zu aerodynamisch günstigen Schnelllaufzahlen führen kann. Es wurde aber erkannt, dass es im Sturmbetrieb sinnvoll sein kann, bei mit zunehmendem Wind verringerter Drehzahl die Leistung nicht zu stark zu reduzieren. Auch spielen mögliche Aspekte eines Abwürgens der Windenergieanlage im Sturmbetrieb keine Rolle, so dass die Leistung bei der Betriebskennline dort vergleichsweise hoch gehalten werden kann. Genau das kann durch die vorgeschlagene verbesserte lineare Betriebskennlinie 704 erreicht werden. Zusätzlich wird dadurch erreicht, dass trotz Drehzahl- und Leistungsverringerung im Sturmbetrieb zum Anlagenschutz eine vergleichsweise hohe Leistung dennoch erzeugt werden kann. Die vorgeschlagene verbesserte lineare Betriebskennlinie 704 kann einen solchen Vorteil schaffen.

Gleichzeitig wurde erkannt, dass bei entsprechender Berücksichtigung von Eigenschaften des verwendeten Generators, besonders seiner maximalen, drehzahlabhängigen Leistungen, dennoch eine vergleichsweise hohe Leistung erzeugt werden kann.

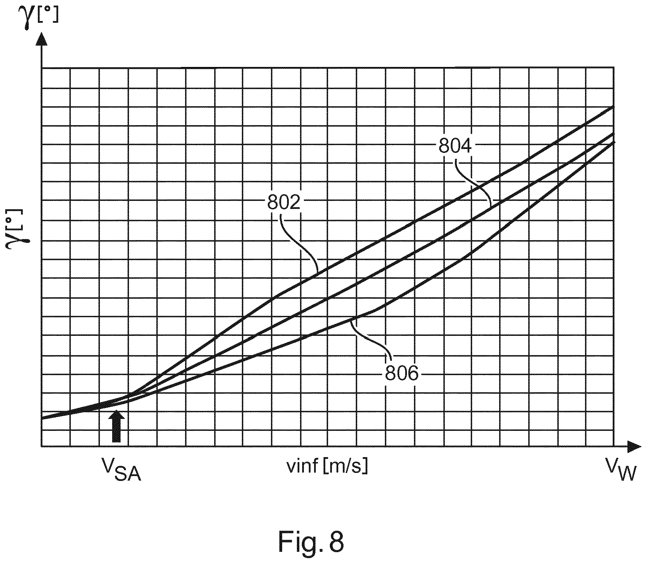

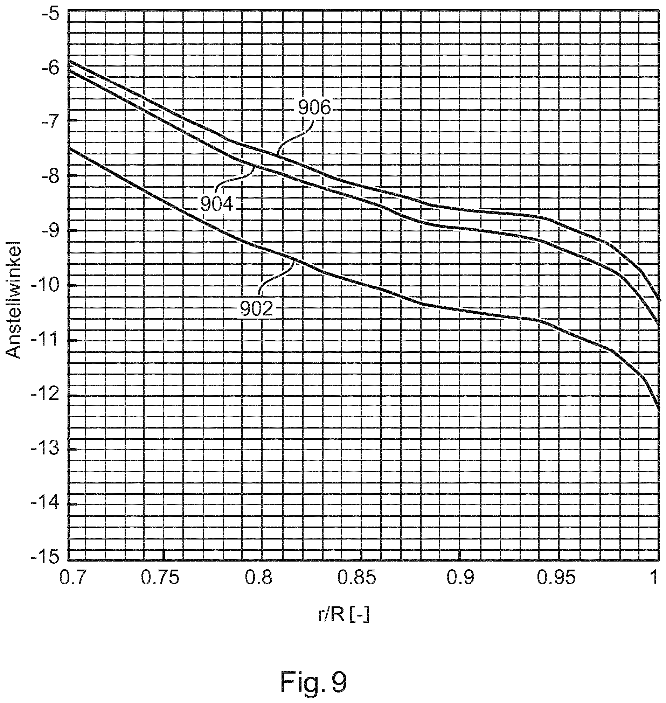

Erreichbare Effekte sind in den Figuren 8 und 9 gezeigt. Figur 8 verdeutlicht in Abhängigkeit der Windgeschwindigkeit V_{w} im Sturmbetrieb den Verlauf eines Blattwinkels γ für drei verschiedene Fälle, so dass Figur 8 drei Blattwinkelverläufe 802, 804 und 806 zeigt. Der erste Blattwinkelverlauf 802 kann auch als normaler Blattwinkelverlauf bezeichnet werden und er gehört im Grunde zu der Windgeschwindigkeits-Drehzahl-Kennlinie 202 gemäß Figur 2. Gleichzeitig liegt eine Betriebskennlinie gemäß der normalen Betriebskennlinie 602 oder 702 der Figur 6 bzw. 7 zugrunde.

Weiterhin ist ein zweiter und damit verbesserter Blattwinkelverlauf 804 gezeigt, der ebenfalls die Windgeschwindigkeits-Drehzahl-Kennlinie 202 der Figur 2 zugrundelegt, aber für den eine verbesserte Betriebskennlinie verwendet wurde. Dazu kann entsprechend eine verbesserte Betriebskennlinie 604 oder 704, oder eine Ähnliche zugrundegelegen haben. Bei dem dritten, weiter verbesserten Blattwinkelverlauf 806 liegt im Vergleich zum zweiten verbesserten Blattwinkelverlauf 804 außerdem auch statt der Windgeschwindigkeits-Drehzahl-Kennlinie 202 die verbesserte Windgeschwindigkeits-Drehzahl-Kennlinie 502 zugrunde.

Es ist in Figur 8 besonders zu erkennen, dass durch die Verwendung einer verbesserten Betriebskennline und zusätzlich durch die Verwendung einer verbesserten Windgeschwindigkeits-Drehzahl-Kennlinie jeweils kleinere Blattwinkel vorliegen. Die Blattwinkel sind zu Beginn des Sturmbetriebs, also bei der Sturmanfangswindgeschwindigkeit V_{SA} auch gleich und steigen dann verschieden stark mit ansteigender Windgeschwindigkeit an. Die vorgeschlagenen Maßnahmen führen somit jeweils für sich und auch in Kombination dazu, dass der Blattwinkel im Sturmbetrieb verringert werden kann, im Vergleich zu Varianten, bei denen eine solche verbesserte Betriebskennlinie und/oder eine verbesserte Windgeschwindigkeits-Drehzahl-Kennlinie nicht verwendet wird.

Besonders ist ein Grund hierfür, dass die vorgeschlagenen Maßnahmen grundsätzlich dazu führen, dass gegenüber Varianten, die diese Maßnahmen nicht durchführen, eine erhöhte Leistung, also eine erhöhte Ausgangsleistung erzeugt wird, die im Übrigen auch in das elektrische Versorgungsnetz eingespeist wird. Dem Wind wird somit mehr Leistung entnommen und die Windenergieanlage regelt dadurch weniger ab. Das schlägt sich in den verringerten Blattwinkeln wieder, die im Übrigen auch als Pitchwinkel oder Rotorblattwinkel bezeichnet werden können. Kleinere Blattwinkel haben auch direkt höhere Anstellwinkel zur Folge. Das wurde erkannt und es wurde erkannt, dass dies ein vorteilhafter Effekt ist, um die Bereiche sehr niedriger Anstellwinkel mit der Gefahr einer Strömungsablösung zu meiden.

Das ist in Figur 9 erläutert. Figur 9 zeigt zu den drei Blattwinkelverläufen 802, 804 und 806 für eine Windgeschwindigkeit den Verlauf des Anstellwinkels im äußeren Bereich des Rotorblattes, nämlich von 70 bis 100 Prozent des Radius r bezogen auf den Maximalradius R. Zu den Blattwinkelverläufen 802, 804 und 806 sind dazu entsprechend die Anstellwinkelverläufe 902, 904 bzw. 906 in der Figur 9 gezeigt. Somit zeigt die Figur 9 auch die Anstellwinkelverteilung im Blattspitzenbereich, die sich aus den zu Figur 8 erwähnten Betriebsführungen ergibt.

Würde der Rotorblattentwurf bspw. im Bereich für 0,96<r/R<1 Profile einsetzen, die bei Anstellwinkeln kleiner als -11° zum Strömungsabriss neigen und damit die angeführten aeroelastischen Probleme auslösen, wäre es durch die vorgeschlagenen Maßnahmen möglich, einen Betrieb der Anlagen in diesem Anstellwinkelbereich mit Werten kleiner als -11° zu vermeiden und damit potenzielles Aufschwingen und möglicherweise einhergehende Schädigung der Rotorblätter zu verhindern. Figur 9 zeigt nämlich, dass nur der Anstellwinkelverlauf 902, der sich bei einer unveränderten Betriebsführung ergibt, einen deutlich niedrigeren Anstellwinkel erreicht, als die Anstellwinkelverläufe 904 und 906 gemäß der verbesserten Betriebsführung.

Die Erfindung hat somit besonders den Zweck, die Anstellwinkel, speziell im Blattspitzenbereich anzuheben. Im Sturmbetrieb können im Blattspitzenbereich negative Anstellwinkel vorliegen, d.h. der Staupunkt der Strömung liegt dann auf der Saugseite des Profils. Bei hohen negativen Anstellwinkeln kommt es typischerweise auf der Druckseite zur Strömungsablösung. Unter gewissen Umständen kann es beim Betrieb der Anlage in der Strömungsablösung auf der Druckseite, unter Fachleuten auch als negativer Stall bezeichnet, zu einem aeroelastisch bedingten Aufschwingen des Rotorblattes kommen, welches bis zur Schädigung des Blattes führen kann. Die vorgeschlagene Erfindung hat durch eine modifizierte Betriebsführung zum Ziel, im Sturmbetrieb die Erreichung von kritischen negativen Anstellwinkeln zu vermeiden und damit die Integrität des Rotorblattes sicherzustellen, zumindest zu verbessern.

Im Ergebnis kann somit durch die vorgeschlagenen Maßnahmen eine Entlastung der Rotorblätter im Sturmbetrieb erreicht werden, während gleichzeitig eine höhere Leistungsausbeute möglich ist.

## Patentansprüche

1. Verfahren zum Steuern einer Windenergieanlage (100) zum Erzeugen elektrischer Leistung aus Wind, wobei
- die Windenergieanlage (100) einen Rotor (106) mit in ihrem Blattwinkel verstellbaren Rotorblättern (108) aufweist und
- der Rotor (106) mit variabler Drehzahl (N) betreibbar ist, umfassend die Schritte:
- Steuern der Windenergieanlage (100) in einem Teillastbetrieb, wenn der Wind eine Windgeschwindigkeit (Vw) unterhalb einer Nennwindgeschwindigkeit aufweist,
- Steuern der Windenergieanlage (100) in einem Sturmbetrieb, wenn der Wind eine Windgeschwindigkeit (Vw) oberhalb einer Sturmanfangswindgeschwindigkeit (V_{SA}) aufweist, wobei
- im Teillastbetrieb und im Sturmbetrieb eine von der Windenergieanlage (100) abzugebende Ausgangsleistung in Abhängigkeit einer Betriebskennlinie eingestellt wird, wobei die Betriebskennlinie einen Zusammenhang zwischen der Drehzahl (N) und der Ausgangsleistung (P) vorgibt,
- zum Steuern der Windenergieanlage (100) im Teillastbetrieb als Betriebskennlinie eine Teillastbetriebskennlinie (602, 702) verwendet wird, und
- zum Steuern der Windenergieanlage (100) im Sturmbetrieb als Betriebskennlinie eine Sturmbetriebskennlinie (604, 704) verwendet wird, und wobei
- die Sturmbetriebskennlinie und die Teillastbetriebskennlinie unterschiedlich sind und die Sturmbetriebskennlinie (604, 704) im Vergleich zur Teillastbetriebskennlinie (602, 702), zumindest abschnittsweise, zu gleichen Leistungswerten (P) geringere Drehzahlwerte (N) aufweist, **dadurch gekennzeichnet, dass**
- die Sturmanfangswindgeschwindigkeit (V_{SA}) abhängig eines zu erwartenden Strömungsabrisses an den Rotorblättern (108) ausgewählt wird.

2. Verfahren nach Anspruch 1,
**dadurch gekennzeichnet, dass**
die Sturmbetriebskennlinie im Vergleich zur Teillastbetriebskennlinie in ihrem gesamten Bereich zu gleichen Leistungswerten (P) geringere Drehzahlwerte (N) aufweist.

3. Verfahren nach Anspruch 1 oder 2,
**dadurch gekennzeichnet, dass**
- die Sturmanfangswindgeschwindigkeit (V_{SA}) abhängig eines Leistungsbeiwertes (Cp-Wertes) der Rotorblätter (108) ausgewählt wird, insbesondere so, dass
- die Windenergieanlage (100) so ausgelegt und gesteuert wird, dass der Leistungsbeiwert (Cp-Wert) wenigstens ab der Nennwindgeschwindigkeit mit zunehmender Windgeschwindigkeit (Vw) sinkt und
- als Sturmanfangswindgeschwindigkeit (V_{SA}) die Windgeschwindigkeit (Vw) gewählt wird, bei der der Leistungsbeiwert (Cp-Wert) unter einen vorgegebenen Sturmgrenzwert des Leistungsbeiwertes (Cp-Sturmgrenzwert) fällt.

4. Verfahren nach einem der vorstehenden Ansprüche,
**dadurch gekennzeichnet, dass**
- die Sturmbetriebskennlinie eine lineare Sturmbetriebskennlinie bildet, die
- von einem vorgegebenen Sturmanfangsleistungswert (P_{N}) bei einer vorgegebenen Sturmanfangsdrehzahl (Nₛₒₗₗ) mit zunehmender Windgeschwindigkeit (Vw)
- linear auf einen Sturmendleistungswert, insbesondere auf den Wert 0, bei einer vorgegebenen Sturmenddrehzahl (Nt) abfällt, oder dass
- die Sturmbetriebskennlinie von dem vorgegebenen Sturmanfangsleistungswert (P_{N}) bei der vorgegebenen Sturmanfangsdrehzahl (Nₛₒₗₗ) mit zunehmender Windgeschwindigkeit (Vw)
- zunächst auf einen Sturmhilfsleistungswert (P_{H}) bei einer vorgegebenen Sturmhilfsdrehzahl (N_{H}) abfällt und von dort weiter
- auf den Sturmendleistungswert bei der vorgegebenen Sturmenddrehzahl (Nt) abfällt, wobei
- der Sturmhilfsleistungswert (P_{H}) bei der vorgegebenen Sturmhilfsdrehzahl (N_{H}) unterhalb einer bzw. der linearen Betriebskennlinie liegt bzw. die Sturmbetriebskennlinie von der Sturmhilfsdrehzahl (N_{H}) zur Sturmenddrehzahl (Nt) flacher verläuft, als von der Sturmanfangsdrehzahl (Nₛₒₗₗ) zur Sturmhilfsdrehzahl (N_{H}).

5. Verfahren nach einem der vorstehenden Ansprüche,
**dadurch gekennzeichnet, dass**
- die Windgeschwindigkeit (Vw) erfasst wird und
- im Sturmbetrieb ab der Sturmanfangswindgeschwindigkeit (V_{SA})
- die Rotorblätter (108) in ihrem Blattwinkel abhängig der Windgeschwindigkeit (Vw) verstellt werden, so dass sich eine geringere Drehzahl (N) einstellt, und
- abhängig der sich einstellenden Drehzahl (N) die Ausgangsleistung (P) gemäß der Sturmbetriebskennlinie (604, 704) eingestellt wird.

6. Verfahren nach einem der vorstehenden Ansprüche,
**dadurch gekennzeichnet, dass**
- im Sturmbetrieb ab der Sturmanfangswindgeschwindigkeit (V_{SA})
- die Rotorblätter (108) in ihrem Blattwinkel so verstellt werden, dass sich eine Drehzahl (N) gemäß einer vorgegebenen Windgeschwindigkeits-Drehzahl-Kennlinie (502) ergibt.

7. Verfahren nach einem der vorstehenden Ansprüche,
**dadurch gekennzeichnet, dass**
- eine bzw. die Windgeschwindigkeits-Drehzahl-Kennlinie (202)
- eine lineare Windgeschwindigkeits-Drehzahl-Kennlinie (202) bildet, die
- von einer bzw. der vorgegebenen Sturmanfangsdrehzahl (Nₛₒₗₗ) bei der vorgegebenen Sturmanfangswindgeschwindigkeit (V_{SA}) mit zunehmender Windgeschwindigkeit (Vw)
- linear auf eine bzw. die vorgegebene Sturmenddrehzahl (Nt) bei einer vorgegebenen Sturmendwindgeschwindigkeit (Vₘₐₓ) abfällt, oder dass
- die Windgeschwindigkeits-Drehzahl-Kennlinie (502)
- von der vorgegebenen Sturmanfangsdrehzahl (Nₛₒₗₗ) bei der Sturmanfangswindgeschwindigkeit (V_{SA2}), insbesondere bei einer erhöhten Sturmanfangswindgeschwindigkeit (V_{SA2}), die größer ist als die vorgegebene Sturmanfangswindgeschwindigkeit (V_{SA}), mit zunehmender Windgeschwindigkeit (Vw)
- zunächst auf eine Sturmzwischendrehzahl (Nₘᵢₙ₁) bei einer vorgegebenen Sturmzwischenwindgeschwindigkeit (Vₘᵢₙ₂) abfällt, wobei die Sturmzwischendrehzahl insbesondere der Sturmhilfsdrehzahl entspricht, und von dort weiter
- auf die vorgegebene Sturmenddrehzahl (Nt) bei der vorgegebenen Sturmendwindgeschwindigkeit (Vₘₐₓ) abfällt, wobei vorzugsweise
- die Sturmzwischendrehzahl (Nₘᵢₙ₁) bei der vorgegebenen Sturmzwischenwindgeschwindigkeit (Vₘᵢₙ₂) oberhalb einer bzw. der linearen Windgeschwindigkeits-Drehzahl-Kennlinie (202) liegt, bzw. die Windgeschwindigkeits-Drehzahl-Kennlinie (502) von der Sturmzwischenwindgeschwindigkeit (Vₘᵢₙ₂) zur Sturmendwindgeschwindigkeit steiler abfällt als von der Sturmanfangswindgeschwindigkeit (V_{SA}) zur Sturmzwischenwindgeschwindigkeit (Vₘᵢₙ₂).

8. Verfahren nach einem der vorstehenden Ansprüche,
**dadurch gekennzeichnet, dass**
- eine bzw. die Windgeschwindigkeits-Drehzahl-Kennlinie (502)
- ab der Sturmanfangswindgeschwindigkeit (V_{SA}) eine Reduzierung der Drehzahl (N) mit zunehmender Windgeschwindigkeit (Vw) vorgibt, wobei
- ein Maß der Reduzierung der Drehzahl (N) mit zunehmender Windgeschwindigkeit (Vw) zunimmt.

9. Verfahren nach einem der vorstehenden Ansprüche,
**dadurch gekennzeichnet, dass**
- mit zunehmender Windgeschwindigkeit (Vw) der Rotorblattwinkel in Abhängigkeit der Windgeschwindigkeit (Vw) zu einer Fahnenstellung hin vergrößert wird, so dass sich eine Winkelerhöhung ergibt, um die Drehzahl (N) zu verringern, und
- abhängig der Verringerung der Drehzahl (N) die Ausgangsleistung (P) verringert wird, und
- die Winkelerhöhung (ΔW) im Verhältnis zur Verringerung der Ausgangsleistung (ΔP) einen Winkel-Leistungs-Änderungskoeffizienten (C_{WP}) bildet, wobei
- der Winkel-Leistungs-Änderungskoeffizient (C_{WP}) dem Betrage nach mit zunehmender Windgeschwindigkeit (Vw) zunimmt, und vorzugsweise ab einer vorbestimmten ersten Umkehr-Windgeschwindigkeit im Sturmbetrieb abnimmt und insbesondere ab einer zweiten Umkehr-Windgeschwindigkeit, die größer als die erste Umkehr-Windgeschwindigkeit ist, wieder zunimmt.

10. Windenergieanlage (100) zum Erzeugen elektrischer Leistung (P) aus Wind, mit
- einem Rotor (106) mit in ihrem Blattwinkel verstellbaren Rotorblättern (108) und wobei
- der Rotor (106) mit variabler Drehzahl (N) betreibbar ist, umfassend
- eine Steuerungseinheit (130) zum Steuern der Windenergieanlage (100) in einem Teillastbetrieb, wenn der Wind eine Windgeschwindigkeit (Vw) unterhalb einer Nennwindgeschwindigkeit aufweist, und
- zum Steuern der Windenergieanlage (100) in einem Sturmbetrieb, wenn der Wind eine Windgeschwindigkeit (Vw) oberhalb einer Sturmanfangswindgeschwindigkeit (V_{SA}) aufweist, wobei
- die Steuerungseinrichtung (130) dazu vorbereitet ist, die Windenergieanlage (100) so zu steuern, dass
- im Teillastbetrieb und im Sturmbetrieb eine von der Windenergieanlage (100) abzugebende Ausgangsleistung (P) in Abhängigkeit einer Betriebskennlinie (604, 704) eingestellt wird, wobei die Betriebskennlinie (604, 704) einen Zusammenhang zwischen der Drehzahl (N) und der Ausgangsleistung (P) vorgibt,
- zum Steuern der Windenergieanlage (100) im Teillastbetrieb als Betriebskennlinie eine Teillastbetriebskennlinie (602, 702) verwendet wird, und
- zum Steuern der Windenergieanlage (100) im Sturmbetrieb als Betriebskennlinie eine Sturmbetriebskennlinie (604, 704) verwendet wird, und wobei
- die Sturmbetriebskennlinie (604, 704) und die Teillastbetriebskennlinie (602, 702) unterschiedlich sind,
- die Sturmbetriebskennlinie (604, 704) im Vergleich zur Teillastbetriebskennlinie (602, 702), zumindest abschnittsweise, zu gleichen Leistungswerten (P) geringere Drehzahlwerte (N) aufweist, **dadurch gekennzeichnet, dass**
- die Sturmanfangswindgeschwindigkeit (V_{SA}) abhängig eines zu erwartenden Strömungsabrisses an den Rotorblättern (108) ausgewählt ist.

11. Windenergieanlage (100) nach Anspruch 10,
**dadurch gekennzeichnet, dass**
- die Windenergieanlage (100), insbesondere die Steuerungseinheit (130), dazu vorbereitet ist, ein Verfahren nach einem der Ansprüche 1 bis 9 durchzuführen.

12. Windenergieanlage (100) nach Anspruch 10 oder 11,
**dadurch gekennzeichnet, dass**
ein Windgeschwindigkeitssensor (132) vorgesehen ist, um die Windgeschwindigkeit (Vw) aufzunehmen, wobei die Windenergieanlage (100), besonders ihre Steuerungseinrichtung (130), dazu vorbereitet ist, die mit dem Windgeschwindigkeitssensor (132) aufgenommene Windgeschwindigkeit (Vw) als Eingangsgröße zu verwenden, um davon abhängig im Sturmbetrieb einen Blattwinkel einzustellen, um die Drehzahl (N) des Rotors (106) mit zunehmender Windgeschwindigkeit (Vw) zu reduzieren.

## Claims

1. A method of controlling a wind power plant (100) for generating electrical power from the wind, wherein
- the wind power plant (100) comprises a rotor (106) having rotor blades (108) which are adjustable in respect of the blade angle thereof and
- the rotor (106) can be operated at a variable rotational speed (N), said method comprising the steps of:
- controlling the wind power plant (100) in a partial load mode when the wind has a wind speed (Vw) below a nominal wind speed,
- controlling the wind power plant (100) in a storm mode when the wind has a wind speed (Vw) above a storm commencement wind speed (V_{SA}), wherein
- an output power to be output by the wind power plant (100) in partial load mode and in storm mode is adjusted according to an operating characteristic curve, wherein the operating characteristic curve determines a relationship between the rotational speed (N) and the output power (P),
- a partial load characteristic curve (602, 702) is used as the operating characteristic curve for controlling the wind power plant (100) in partial load mode, and
- a storm mode characteristic curve (604, 704) is used as the operating characteristic curve for controlling the wind power plant (100) in storm mode, and wherein
- the storm mode characteristic curve and the partial load characteristic curve are different and the storm mode characteristic curve (604, 704), in comparison with the partial load characteristic curve (602, 702), has lower rotational speed values (N) for the same power values (P), at least in sections,
**characterized in that**
- the storm commencement wind speed (V_{SA}) is selected according to an expected stalling of the rotor blades (108).

2. The method according to claim 1,
**characterised in that**
the storm mode characteristic curve, in comparison with the partial load characteristic curve, has lower rotational speed values (N) for the same power values (P) over its entire range.

3. The method according to claim 1 or 2,
**characterised in that**
- the storm commencement wind speed (V_{SA}) is selected according to a power coefficient (Cp value) of the rotor blades (108), in particular such that
- the wind power plant (100) is designed and configured in such a way that the power coefficient (Cp value) decreases with increasing wind speed (Vw) at least from the nominal wind speed, and
- the wind speed (Vw) at which the power coefficient (Cp value) falls below a predefined storm threshold for the power coefficient (Cp storm threshold) is selected as the storm commencement wind speed (V_{SA}).

4. The method according to any one of the preceding claims,
**characterised in that**
- the storm mode characteristic curve forms a linear storm mode characteristic curve which
- decreases with increasing wind speed (Vw) from a predefined storm commencement power value (P_{N}) at a predefined storm commencement rotational speed (Nset)
- linearly to a final storm power value, in particular to the value 0, at a predefined final storm rotational speed (Nt), or that
- the storm mode characteristic curve decreases initially, with increasing wind speed (Vw), from the predefined storm commencement power value (P_{N}) at the predefined storm commencement rotational speed (Nₛₑₜ)
- to a storm auxiliary power value (P_{H}) at a predefined storm auxiliary rotational speed (N_{H}) and from there
- to the final storm power value at the predefined final storm rotational speed (Nt), wherein
- the storm auxiliary power value (P_{H}) at the predefined storm auxiliary rotational speed (N_{H}) lies below a/the linear operating characteristic curve, and the storm mode characteristic curve is flatter from the storm auxiliary rotational speed (N_{H}) to the final storm rotational speed (Nt) than from the storm commencement rotational speed (Nₛₑₜ) to the storm auxiliary rotational speed (N_{H}).

5. The method according to any one of the preceding claims,
**characterised in that**
- the wind speed (Vw) is measured and,
- in storm mode from the storm commencement wind speed (V_{SA}),
- the rotor blades (108) are adjusted in respect of their blade angle according to the wind speed (Vw), such that a lower rotational speed (N) is reached, and
- the output power (P) is set in accordance with the storm mode characteristic curve (604, 704) depending on the rotational speed (N) that is reached.

6. The method according to any one of the preceding claims,
**characterised in that**
- in storm mode from the storm commencement wind speed (V_{SA}),
- the rotor blades (108) are adjusted in respect of their blade angle such that a rotational speed (N) according to a predefined wind speed/rotational speed characteristic curve (502) results.

7. The method according to any one of the preceding claims,
**characterised in that**
- a/the wind speed/rotational speed characteristic curve (202)
- forms a linear wind speed/rotational speed characteristic curve (202) which
- decreases linearly with increasing wind speed (Vw) from a/the predefined storm commencement rotational speed (Nₛₑₜ) at the predefined storm commencement wind speed (V_{SA})
- to a/the predefined final storm rotational speed (Nt) at a predefined final storm wind speed (Vₘₐₓ), or that
- the wind speed/rotational speed characteristic curve (502)
- decreases initially with increasing wind speed (Vw) from the predefined storm commencement rotational speed (Nₛₑₜ) at the storm commencement wind speed (V_{SC2}), in particular at a higher storm commencement wind speed (V_{SC2}) that is greater than the predefined storm commencement wind speed (V_{SA}),
- to an intermediate storm rotational speed (Nₘᵢₙ₁) at a predefined intermediate storm wind speed (Vₘᵢₙ₂), wherein the intermediate storm rotational speed is equal to the storm auxiliary rotational speed, and from there
- to the predefined final storm rotational speed (Nt) at the predefined final storm wind speed (Vₘₐₓ), wherein it is preferable that
- the intermediate storm rotational speed (Nₘᵢₙ₁) at the predefined intermediate storm wind speed (Vₘᵢₙ₂) is above a/the linear wind speed/rotational speed characteristic curve (202), and/or the wind speed/rotational speed characteristic curve (502) decreases from the intermediate storm wind speed (Vₘᵢₙ₂) to the final storm wind speed more steeply than from the storm commencement wind speed (V_{SA}) to the intermediate storm wind speed (Vₘᵢₙ₂).

8. The method according to any one of the preceding claims,
**characterised in that**
- a/the wind speed/rotational speed characteristic curve (502)
- specifies with increasing wind speed (Vw) a reduction of the rotational speed (N) from the storm commencement wind speed (V_{SA}), wherein
- a measure of the reduction in rotational speed (N) increases with increasing wind speed (Vw).

9. The method according to any one of the preceding claims,
**characterised in that**
- with increasing wind speed (Vw) the rotor blade angle is increased according to the wind speed (Vw) towards a feathered position such that the blade angle increases in order to reduce the rotational speed (N), and
- the output power (P) is reduced according to the reduction in rotational speed (N), and
- the ratio of the blade angle increase (ΔW) to the reduction in output power (ΔP) forms an angle/power change coefficient (C_{WP}), wherein
- the angle/power variation coefficient (C_{WP}) increases in magnitude with increasing wind speed (Vw), and preferably decreases from a predetermined first reversal wind speed in storm mode and in particular increases again from a second reversal wind speed that is greater than the first reversal wind speed.

10. A wind power plant (100) for generating electrical power (P) from the wind, comprising
- a rotor (106) having rotor blades (108) which are adjustable in respect of the blade angle, wherein
- the rotor (106) can be operated at a variable rotational speed (N),
- a control unit (130) for controlling the wind power plant (100) in a partial load mode when the wind has a wind speed (Vw) below a nominal wind speed, and
- for controlling the wind power plant (100) in a storm mode when the wind has a wind speed (Vw) above a storm commencement wind speed (V_{SA}), wherein
- the control means (130) is configured to control the wind power plant (100) in such a way that
- an output power (P) to be output by the wind power plant (100) in partial load mode and in storm mode is adjusted according to an operating characteristic curve (604, 704), wherein the operating characteristic curve (604, 704) determines a relationship between the rotational speed (N) and the output power (P),
- a partial load characteristic curve (602, 702) is used as the operating characteristic curve for controlling the wind power plant (100) in the partial load mode, and
- a storm mode characteristic curve (604, 704) is used as the operating characteristic curve for controlling the wind power plant (100) in storm mode, and wherein
- the storm mode characteristic curve (604, 704) and the partial load characteristic curve (602, 702) are different and
- the storm mode characteristic curve (604, 704), in comparison with the partial load characteristic curve (602, 702), has lower rotational speeds (N) for the same power values (P), at least in sections,
**characterized in that**
- the storm commencement wind speed (V_{SA}) is selected according to an expected stalling of the rotor blades (108).

11. The wind power plant (100) according to claim 10,
**characterised in that**
- the wind power plant (100), in particular the control unit (130), is configured to perform a method according to any one of claims 1 to 9.

12. The wind power plant (100) according to claim 10 or 11,
**characterised in that**
a wind speed sensor (132) is provided to record the wind speed (Vw), wherein the wind power plant (100), in particular its control means (130), is configured to use the wind speed (Vw) recorded by means of the wind speed sensor (132) as an input variable in order to adjust a blade angle in storm mode according to said variable, in order to reduce to reduce the rotational speed (N) of the rotor (106) with increasing wind speed (Vw).

## Revendications

1. Procédé de commande d'une éolienne (100) pour produire une puissance électrique à partir du vent, dans lequel
- l'éolienne (100) présente un rotor (106) avec des pales de rotor (108) dont l'angle de pale peut être ajusté, et
- le rotor (106) peut fonctionner à une vitesse de rotation (N) variable, comprenant les étapes :
- de commande de l'éolienne (100) dans un mode de fonctionnement en charge partielle lorsque le vent présente une vitesse de vent (Vw) inférieure à la vitesse de vent nominale,
- de commande de l'éolienne (100) dans un mode de fonctionnement de tempête lorsque le vent présente une vitesse de vent (Vw) supérieure à une vitesse de vent de début de tempête (V_{SA}), dans lequel
- dans le mode de fonctionnement en charge partielle et dans le mode de fonctionnement de tempête, une puissance de sortie à délivrer par l'éolienne (100) est réglée en fonction d'une courbe caractéristique de fonctionnement, dans lequel la courbe caractéristique de fonctionnement spécifie un lien entre la vitesse de rotation (N) et la puissance de départ (P),
- pour commander l'éolienne (100) dans le mode de fonctionnement en charge partielle, une courbe caractéristique de fonctionnement en charge partielle (602, 702) est utilisée en tant que courbe caractéristique de fonctionnement, et
- pour commander l'éolienne (100) dans le mode de fonctionnement de tempête, une courbe caractéristique de fonctionnement de tempête (604, 704) est utilisée en tant que courbe caractéristique de fonctionnement, et dans lequel
- la courbe caractéristique de mode de fonctionnement de tempête et la courbe caractéristique de mode de fonctionnement en charge partielle sont différentes et la courbe caractéristique de fonctionnement de tempête (604, 704) présente des valeurs de vitesse de rotation (N) inférieures par rapport à des valeurs de puissance (P) identique, au moins par endroits, en comparaison avec la courbe caractéristique de fonctionnement en charge partielle (602, 702), **caractérisé en ce que**
- la vitesse de vent de début de tempête (V_{SA}) est sélectionnée en fonction d'un décrochage attendu sur les pales de rotor (108).

2. Procédé selon la revendication 1,
**caractérisé en ce que**
la courbe caractéristique de fonctionnement de tempête présente des valeurs de vitesse de rotation (N) inférieures par rapport à des valeurs de puissance (P) identiques dans la totalité de sa plage en comparaison avec la courbe caractéristique de fonctionnement en charge partielle.

3. Procédé selon la revendication 1 ou 2,
**caractérisé en ce que**
- la vitesse de vent de début de tempête (V_{SA}) est sélectionnée en fonction d'un coefficient de puissance (valeur Cp) des pales de rotor (108), en particulier de telle sorte que
- l'éolienne (100) est conçue et commandée de telle sorte que le coefficient de puissance (valeur Cp) baisse au moins à partir de la vitesse de vent nominale au fur et à mesure que la vitesse de vent (Vw) augmente, et
- la vitesse de vent (Vw), à laquelle le coefficient de puissance (valeur Cp) passe sous une valeur limite de tempête prédéfinie du coefficient de puissance (valeur limite de tempête Cp), est choisie en tant que vitesse de vent de début de tempête (V_{SA}).

4. Procédé selon l'une quelconque des revendications précédentes,
**caractérisé en ce que**
- la courbe caractéristique de fonctionnement de tempête forme une courbe caractéristique de fonctionnement de tempête linéaire, qui
- chute depuis une valeur de puissance de début de tempête (P_{N}) spécifiée à une vitesse de rotation de début de tempête (N_{théorique}) spécifiée au fur et à mesure que la vitesse de vent augmente (Vw)
- de manière linéaire sur une valeur de puissance de fin de tempête, en particulier sur la valeur 0, à une vitesse de rotation de fin de tempête (Nₜ) spécifiée, ou que
- la courbe caractéristique de fonctionnement de tempête chute depuis la valeur de puissance de début de tempête (P_{N}) spécifiée à la vitesse de rotation de début de tempête (N_{théorique}) spécifiée au fur et à mesure que la vitesse de vent (Vw) augmente,
- en premier lieu sur une valeur de puissance auxiliaire de tempête (P_{H}) à une vitesse de rotation auxiliaire de tempête (N_{H}) spécifiée et, de là,
- chute sur la valeur de puissance de fin de tempête à la vitesse de rotation de fin de tempête (Nₜ) spécifiée, dans lequel
- la valeur de puissance auxiliaire de tempête (P_{H}) est inférieure à une ou la courbe caractéristique de fonctionnement linéaire à la vitesse de rotation auxiliaire de tempête (N_{H}) spécifiée ou la courbe caractéristique de fonctionnement de tempête s'étend de manière plus plate depuis la vitesse de rotation auxiliaire de tempête (N_{H}) à la vitesse de rotation de fin de tempête (Nₜ) que depuis la vitesse de rotation de début de tempête (N_{théorique}) à la vitesse de rotation auxiliaire de tempête (N_{H}).

5. Procédé selon l'une quelconque des revendications précédentes,
**caractérisé en ce que**
- la vitesse de vent (V_{W}) est détectée, et
- dans le mode de fonctionnement de tempête, à partir de la vitesse de vent de début de tempête (V_{SA})
- l'angle de pale des pales de rotor (108) est ajusté en fonction de la vitesse de vent (Vw) de manière à régler une vitesse de rotation (N) inférieure, et
- en fonction de la vitesse de rotation (N) qui se règle, la puissance de sortie (P) est réglée conformément à la courbe caractéristique de fonctionnement de tempête (604, 704).

6. Procédé selon l'une quelconque des revendications précédentes,
**caractérisé en ce que**
- dans le mode de fonctionnement de tempête, à partir de la vitesse de vent de début de tempête (V_{SA})
- l'angle de pale des pales de rotor (108) est ajusté de telle sorte qu'il en résulte une vitesse de rotation (N) conformément à une courbe caractéristique de vitesse de vent-vitesse de rotation (502) spécifiée.

7. Procédé selon l'une quelconque des revendications précédentes,
**caractérisé en ce que**
- une ou la courbe caractéristique de vitesse de vent - vitesse de rotation (202)
- forme une courbe caractéristique linéaire de vitesse de vent-vitesse de rotation (202), qui
- chute depuis une ou de la vitesse de rotation de début de tempête (N_{théorique}) spécifiée à la vitesse de vent de début de tempête (V_{SA}) spécifiée au fur et à mesure que la vitesse de vent (Vw) augmente,
- de manière linéaire sur une ou la vitesse de rotation de fin de tempête (Nₜ) spécifiée à une vitesse de vent de fin de tempête (Vₘₐₓ) spécifiée, ou que
- la courbe caractéristique de vitesse de vent-vitesse de rotation (502)
- chute depuis la vitesse de rotation de début de tempête (N_{théorique}) spécifiée à la vitesse de vent de début de tempête (V_{SA2}), en particulier à une vitesse de vent de début de tempête augmentée (V_{SA2}), qui est supérieure à la vitesse de vent de début de tempête (V_{SA}) spécifiée, au fur et à mesure que la vitesse de vent (Vw) augmente
- d'abord sur une vitesse de rotation intermédiaire de tempête (Nₘᵢₙ₁) à une vitesse de vent intermédiaire de tempête (Vₘᵢₙ₂) spécifiée, dans lequel la vitesse de rotation intermédiaire de tempête correspond en particulier à la vitesse de rotation auxiliaire de tempête, et, de là,
- chute sur la vitesse de rotation de fin de tempête (Nₜ) spécifiée à la vitesse de vent de fin de tempête (Vₘₐₓ), dans lequel de préférence
- la vitesse de rotation intermédiaire de tempête (Nₘᵢₙ₁) est supérieure à une ou la courbe caractéristique linéaire de vitesse de vent-vitesse de rotation (202) à la vitesse vent intermédiaire de tempête (Vₘᵢₙ₂) spécifiée, ou la courbe caractéristique de vitesse de vent-vitesse de rotation (502) chute plus abruptement de la vitesse de vent intermédiaire de tempête (Vₘᵢₙ₂) vers la vitesse de vent de fin de tempête que de la vitesse de vent de début de tempête (V_{SA}) vers la vitesse de vent intermédiaire de tempête (Vₘᵢₙ₂).

8. Procédé selon l'une quelconque des revendications précédentes,
**caractérisé en ce que**
- une ou la courbe caractéristique de vitesse de vent-vitesse de rotation (502)
- spécifie, à partir de la vitesse de vent de début de tempête (V_{SA}), une réduction de la vitesse de rotation (N) au fur et à mesure que la vitesse de vent (Vw) augmente, dans lequel
- une mesure de la réduction de la vitesse de rotation (N) augmente au fur et à mesure que la vitesse de vent (Vw) augmente.

9. Procédé selon l'une quelconque des revendications précédentes,
**caractérisé en ce que**
- au fur et à mesure que la vitesse de vent (Vw) augmente, l'angle de pale de rotor s'agrandit vers une position en drapeau en fonction de la vitesse de vent (Vw) de telle sorte qu'il en résulte une augmentation d'angle pour réduire la vitesse de rotation (N), et
- la puissance de sortie (P) est réduite en fonction de la réduction de la vitesse de rotation (N), et
- l'augmentation d'angle (ΔW) forme, par rapport à une réduction de la puissance de départ (ΔP), un coefficient de modification d'angle-puissance (C_{WP}), dans lequel
- le coefficient de modification d'angle-puissance (C_{WP}) augmente selon la valeur au fur et à mesure que la vitesse de vent (Vw) augmente, et diminue de préférence à partir d'une première vitesse de vent inverse prédéfinie dans le mode de fonctionnement de tempête et augmente à nouveau en particulier à partir d'une deuxième vitesse de vent inverse, qui est supérieure à la première vitesse de vent inverse.

10. Eolienne (100) destinée à produire une puissance électrique (P) à partir du vent, avec
- un rotor (106) avec des pales de rotor (108) à angle de pale ajustable, et dans laquelle
- le rotor (106) peut fonctionner avec une vitesse de rotation variable (N), comprenant
- une unité de commande (130) destinée à commander l'éolienne (100) dans un mode de fonctionnement en charge partielle lorsque le vent présente une vitesse de vent (V_{W}) inférieure une vitesse de vent nominale, et
- pour commander l'éolienne (100) dans un mode de fonctionnement de tempête lorsque le vent présente une vitesse de vent (Vw) supérieure une vitesse de vent de début de tempête (V_{SA}), dans laquelle
- le dispositif de commande (130) est préparé pour commander l'éolienne (100) de telle sorte que
-- dans le mode de fonctionnement en charge partielle et dans le mode de fonctionnement de tempête, une puissance de sortie (P) à délivrer par l'éolienne (100) est réglée en fonction de la courbe caractéristique de fonctionnement (604, 704), dans laquelle la courbe caractéristique de fonctionnement (604, 704) spécifie un lien entre la vitesse de rotation (N) et la puissance de sortie (P),
-- pour commander l'éolienne (100) dans le mode de fonctionnement en charge partielle en tant que courbe caractéristique de fonctionnement, une courbe caractéristique de fonctionnement en charge partielle (602, 702) est utilisée, et
-- pour commander l'éolienne (100) dans le mode de fonctionnement de tempête, une courbe caractéristique de mode de fonctionnement de tempête (604, 704) est utilisée en tant que courbe caractéristique de fonctionnement,
et dans laquelle
-- la courbe caractéristique de fonctionnement de tempête (604, 704) et la courbe caractéristique de fonctionnement en charge partielle (602, 702) sont différentes,
-- la courbe caractéristique de fonctionnement de tempête (604, 704) présente des valeurs de vitesse de rotation (N) inférieures, au moins par endroits, par rapport à des valeurs de puissance (P) identiques en comparaison avec la courbe caractéristique de fonctionnement en charge partielle (602, 702), **caractérisée en ce que**
- la vitesse de vent de début de tempête (V_{SA}) est choisie en fonction d'un décrochage attendu sur les pales de rotor (108).

11. Eolienne (100) selon la revendication 10,
**caractérisée en ce que**
- l'éolienne (100), en particulier l'unité de commande (130), est préparée pour mettre en oeuvre un procédé selon l'une quelconque des revendications 1 à 9.

12. Eolienne (100) selon la revendication 10 ou 11,
**caractérisée en ce que**
un capteur de vitesse de vent (132) est prévu pour relever la vitesse de vent (Vw), dans laquelle l'éolienne (100), en particulier son dispositif de commande (130), est préparée pour utiliser, en tant que grandeur d'entrée, la vitesse de vent (Vw) relevée avec le capteur de vitesse de vent (132) pour régler en fonction, dans le mode de fonctionnement de tempête, un angle de pale pour réduire la vitesse de rotation (N) du rotor (106) au fur et à mesure que la vitesse de vent (Vw) augmente.
